# EUROPEAN PATENT SPECIFICATION

(11) **EP 4 212 571 B1**
(45) Date of publication and mention of the grant of the patent: **11.11.2026**
(21) Application number: 22151617.2
(22) Date of filing: 14.01.2022
(51) Int. Cl.: C08G 64/06, C08G 64/22, C08G 64/30

(54) **PROCESS FOR PREPARING A POLYCARBONATE BY FRIEDEL-CRAFTS ACYLATION**
VERFAHREN ZUR HERSTELLUNG EINES POLYCARBONATS DURCH FRIEDEL-CRAFTS-ACYLIERUNG
PROCÉDÉ DE PRÉPARATION D'UN POLYCARBONATE PAR ACYLATION DE FRIEDEL-CRAFTS

(43) Date of publication of application: 19.07.2023
(73) Proprietor: Covestro Deutschland AG, 51373 Leverkusen (DE)
(72) Inventor: GARSKA, Bernd, 50677 Köln (DE); HEIJL, Jan, 9160 Lokeren (BE); MAES, Bert, 2610 Wilrijk (BE); MAMPUYS, Pieter, 2240 Zandhoven (BE)
(74) Representative: Levpat

(56) References cited:
- US-B2- 8 962 788

## Description

The present invention relates to a process for preparing a polycarbonate using electrophilic aromatic substitution including the reaction of a diaryl carbonate with a structure of formula (I) and an acyl halide, preferably an acyl chloride or acyl bromide, with a structure of formula (IIa) or an anhydride with a structure of formula (IIb) as described below. Furthermore, the invention relates to a polycarbonate comprising a repeating unit with a structure of formula (IIIa) or (IIIb) as described below.

Polycarbonates, in particular aromatic polycarbonates, are known to exhibit improved mechanical and optical properties, heat resistance and weatherability. Due to such a property profile, polycarbonates are employed in various indoor and outdoor applications. Typically, polycarbonates are prepared by the generally known interphase phosgenation process or *via* melt transesterification (cf. for example US 8,962,788 B2). Both processes employ bisphenols, e.g. bisphenol A ((2,2-bis(4-hydroxyphenol)propane), reacting either with phosgene or a diaryl carbonate to result in a polymeric structure. This means that typically the polymeric backbone is defined by the structure of the diol and the carbonate group, being introduced into said backbone by the polymerization reaction itself. Employing aromatic diols such as bisphenol A, bisphenol B, bisphenol C, bisphenol E, bisphenol F, bisphenol G, bisphenol M, bisphenol P, bisphenol TMC and bisphenol Z, backbones may be formed that comprise the carbonate group at the aromatic ring. Said carbonate group is located *para* to the at least one other substituent at the aromatic ring which, depending on the structure of the diol, connects the carbonate aromatic ring-group to the next carbonate group in the polycarbonate backbone.

However, there is a constant need for improving the properties of classical aromatic (co)polycarbonates including the use of bio-based aromatic diols. Thus, developing alternative synthesis routes besides the classical interphase phosgenation or melt transesterification processes - enabling to connect aromatic moieties with carbonate groups, raises scientific and economic interests.

Therefore, it is an object of the present invention to provide an alternative process for preparing a polycarbonate. Preferably, it is an object of the present invention to provide a process for preparing a polycarbonate with a repeating unit comprising two aromatic moieties being linked with each other and - within the repeating unit - one of the aromatic moieties being substituted with a carbonate group. More preferably, it is an object of the present invention to provide a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. Still preferably, it is an object of the present invention to provide a process for preparing a polycarbonate, including a reaction for the formation of the repeating unit, comprising linking of two aromatic moieties with each other. Such a reaction mandatorily requires that the aromatic moieties comprise carbonate substituents in order to obtain a polycarbonate comprising carbonate groups. Therefore, it is also preferably an object of the present invention to provide a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Besides the above, it is an object of the present invention to provide a polycarbonate, that may be prepared by the process according to the invention. Also, it is an object of the invention to provide a polycarbonate comprising novel chemical and physical properties when compared to polycarbonates known from the state of the art.

A well-known organic reaction is the "Friedel-Crafts acylation" which is used to attach substituents to an aromatic ring. Friedel-Crafts acylation involves the acylation of an aromatic ring with an acyl halide using a strong Lewis acid, such as aluminum chloride or ferric chloride, for example, as a catalyst. The reaction product is a ketone which forms a rather stable complex with Lewis acids such as aluminum chloride, which is why a stoichiometric amount or more of the catalyst must generally be employed. It is thus a further objective of the present invention to investigate whether the Friedel-Crafts acylation as such or in an amended way can be used to obtain a polycarbonate.

In the literature, "Friedel-Crafts acylations" of aromatic phenols have been described. Mukaiyama *et al*., for example, have shown the Friedel-Crafts acylation of anisole and veratrole with acyl chlorides (Mukaiyama et al.: The diphenylboryl hexachloroantimonate promoted Friedel Crafts acylation reaction. Chem. Lett. 1986, 15, 165-168.). However, Friedel-Crafts acylations of aromatic rings substituted with carbonate groups have not been investigated so far.

Based on this prior art, it is a further object of the present invention to provide a process for preparing polycarbonates (other than the interphase phosgenation or the melt transesterification method) and to provide a polycarbonate as such, the process and the polycarbonate being based on existing, but also novel aromatic building blocks, especially bio-based building blocks. Preferably, this process should be economically and ecologically beneficial. Moreover, this process preferably should result in a polycarbonate having improved properties, especially with respect to mechanical and/or optical properties, heat resistance and/or weatherability.

At least one of the above-mentioned objects, preferably all of these objects have been solved by the present invention.

Surprisingly, the inventors found a process for preparing a polycarbonate that provides an alternative to known processes such as interphase phosgenation or melt transesterification. More surprisingly, the inventors identified a process for preparing a polycarbonate with a repeating unit comprising two aromatic moieties being linked with each other and - within the repeating unit - one of the aromatic moieties being substituted with a carbonate group. Still surprisingly, the inventors found a process for preparing a polycarbonate with a repeating unit comprising two aromatic moieties being linked with each other and - within the repeating unit - one of the aromatic moieties being substituted with a carbonate group, wherein the carbonate group is introduced to the repeating unit without the need of separately forming the carbonate group. As mentioned, the inventors were able to find a process for preparing a polycarbonate, including a reaction for the formation of the repeating unit, comprising linking of two aromatic moieties with each other. Such a reaction mandatorily requires that the aromatic moieties comprise carbonate substituents in order to form a polymer backbone with repeating units, each repeating unit comprising a carbonate group substituting one of the aromatic moieties. Confronted with this objective, the inventors then identified a process for preparing a polycarbonate with a repeating unit that comprises two aromatic moieties being linked with each other, and - within the repeating unit - one of the aromatic moieties being substituted with a carbonate group, wherein said carbonate group is not affected by the process as such. In this context the term "affected" preferably means that the carbonate is not degraded.

Furthermore, the inventors identified a polycarbonate, obtainable by the process according to the invention. Also, the inventors identified a polycarbonate comprising novel chemical and physical properties when compared to polycarbonates known from the state of the art.

The inventors have identified a process and a polycarbonate, that employ/comprise existing, but also novel aromatic building blocks, especially bio-based building blocks. Also, the inventors identified a process for preparing a polycarbonate with economic and ecologic efforts. The process identified by the inventors results in a polycarbonate having improved properties, in particular with respect to mechanical and/or optical properties, heat resistance and/or weatherability. The same applies to the polycarbonate as such.

Surprisingly, it was identified that the Friedel-Crafts acylation employing acyl halides, preferably acyl chlorides or acyl bromides, with a structure of formula (IIa) or an anhydride with a structure of formula (IIb) and diaryl carbonates with a structure of formula (I) can be used in order to link two aromatic moieties bearing a carbonate group, preferably both bearing a carbonate group, with a diketone bridge. This reaction as such can be used according to the present invention to polymerize such aromatic moieties to give a polycarbonate. This reaction can be used for existing building blocks, but also for novel, especially bio-based building blocks (such as guaiacol carbonate, also known as bis(2-methoxyphenyl) carbonate, and derivatives thereof, for example bis(2-methoxy-4-propylphenyl) carbonate). Moreover, the resulting polycarbonate obtained from this process preferably comprises improved properties with respect to mechanical and/or optical properties, heat resistance and/or weatherability.

Accordingly, the present invention provides a process for preparing a polycarbonate using electrophilic aromatic substitution, comprising a reaction of a compound with a structure of formula (I) 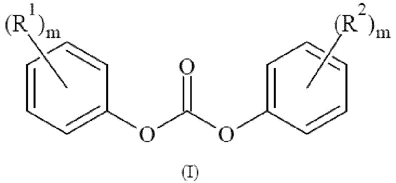
and a compound with a structure of formula (IIa) or (IIb) 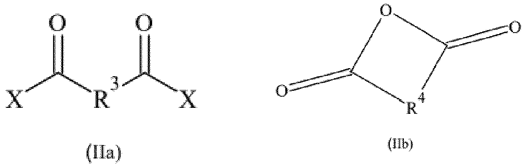
in the presence of a Lewis acid catalyst, preferably a metal- or transition metal-based Lewis acid catalyst, wherein the reaction using compound (IIa) yields a polycarbonate comprising a repeating unit with a structure of formula (IIIa) 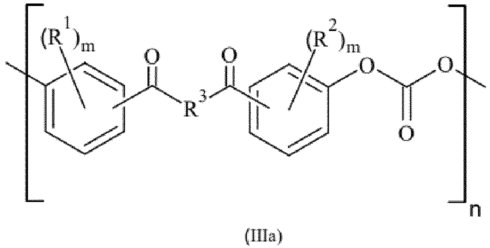 wherein the repeating unit with the structure of formula (IIIa) comprises two aromatic rings, a carbonate group -OC(=O)O- and a linking group -C(=O)R³C(=O)-, wherein one of the two aromatic rings is substituted with the carbonate group, the two aromatic rings are linked *via* the linking group and the linking group in each repeating unit independently is either in *ortho-, meta- or para-position* with respect to the carbonate group,
wherein the reaction using a compound (IIb) yields an intermediate product comprising a terminal carboxylic acid, the intermediate product upon following esterification with a diol with a structure of formula (IV) 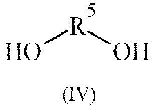
yielding a polycarbonate comprising a repeating unit with a structure of formula (IIIb) 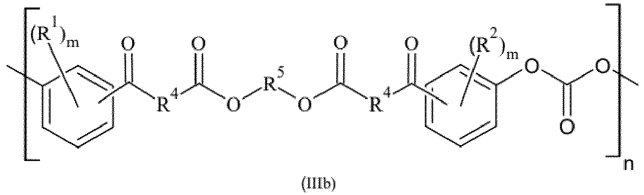 wherein the repeating unit with the structure of formula (IIIb) comprises two aromatic rings, a carbonate group -OC(=O)O- and a linking group -C(=O)R⁴C(=O)OR⁵OC(=O)R⁴C(=O)-, wherein one of the two aromatic rings is substituted with the carbonate group, the two aromatic rings are linked *via* the linking group and the linking group in each repeating unit independently is either in *ortho-, meta- or para-position* with respect to the carbonate group,
and wherein
   - each m independently is 1 to 4, preferably 1 to 3,
   - each R¹ and R² independently represents a R¹ substituent and a R² substituent, respectively, being capable of activating the aromatic ring which it substitutes by a mesomeric effect and/or an inductive effect, with the proviso that at least one R¹ substituent and additionally at least one R² substituent exhibits a +M effect,
   - R³ represents
      ∘ an alkyl or alkylene group having 1 to 20 carbon atoms, wherein this alkyl or alkylene group is optionally interrupted by at least one hetero atom, carbonyl group with ester or ketone functionality, a thioester group or a combination of these,
      ∘ an optionally substituted cycloalkyl or cycloalkylene group having 6 to 12 carbon atoms in total,
      ∘ an optionally substituted phenyl group having 6 to 12 carbon atoms in total,
   - each X independently represents a halogen atom,
   - R⁴ represents an alkyl or alkylene group,
   - R⁵ represents an alkyl or alkylene group and
   - n is the number of repeating units and is 6 to 60.

According to the present invention, it is preferably understood that R³ of formula (IIIa) comprises the definition of -R⁴-(CO)O-R⁵-O(CO)-R⁴- and thus, R³ can be represented by -R⁴-(CO)O-R⁵-O(CO)-R⁴-.

Polycarbonates in the context of the present invention are either homopolycarbonates or copolycarbonates; the polycarbonates may be linear or branched depending on the type of monomers used in the present invention. For the purposes of the present invention, the expression "bio-based" is understood in a sense that the relevant chemical compound is at the filing date available and/or obtainable *via* a renewable and/or sustainable raw material and/or preferably is such a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to distinguish it from raw materials produced from fossil raw materials, also referred to in accordance with the invention as petroleum-based. Whether a raw material is bio-based or petroleum-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. Exemplary bio-based carbonates in the sense of this invention are guaiacol carbonate and bis(2-methoxy-4-propylphenyl) carbonate.

According to the present invention reference is made to the mechanism of electrophilic aromatic substitution. This process is known to the person skilled in the art and is described in various textbooks dealing with organic chemistry. The process according to the present invention is based on a Friedel-Crafts acylation reaction, but includes amendments to the classical name reaction. Therefore, reference is rather made to the more general electrophilic aromatic substitution. However, the person skilled in the art knowing and understanding the concepts of the Friedel-Crafts acylation reaction and once having perceived the present invention can transfer the principles of this general concept to the amendments of the process of the present invention.

Moreover, according to the present invention reference is made to a substituent (of an aromatic ring) that is capable of activating the aromatic ring which it substitutes by a mesomeric effect and/or an inductive effect. In the context of an electrophilic aromatic substitution, this concept is known to the person skilled in the art, too.

Preferably, the term "mesomeric effect" or M effect refers to the known resonance effect. Still preferably, the term refers to the delocalization of electrons in a molecule by the interaction of two pi bonds or between a pi bond and a lone pair of electrons present on an adjacent atom. The term is preferably used to describe the electronic effect of a substituent on an aromatic moiety based on relevant resonance structures. It often is symbolized by the letter M. The mesomeric effect can be negative (-M) when the substituent withdraws electrons from the aromatic ring through pi bonds - called resonance electron withdrawal. The effect can also be positive (+M, called resonance electron donation) when the substituent donates electrons through the pi bonds to the aromatic ring.

Preferably, the term "inductive effect" or I effect refers to the displacement of electrons *via* sigma bonds towards a more electronegative atom. Due to the inductive effect one end of a bond obtains a partial positive charge and the other end a partial negative charge. Relative inductive effects of substituents bonded to an aromatic ring are described with reference to hydrogen. For example, a substituent with a +I effect (electron-donating character) donates its sigma electrons to the aromatic ring more strongly than hydrogen will. In contrast, a substituent with a -I effect (electron-withdrawing character) will more strongly withdraw or accept the sigma electrons compared to hydrogen.

The M and I effect in the context of an electrophilic aromatic substitution are known to the person skilled in the art. It is known that existing substituent groups on an aromatic ring affect the overall reaction rate or have a directing effect on the positional isomer of the products that are formed. Here, an electron-donating group preferably is an atom or functional group that donates some of its electron density into a conjugated pi system *via* mesomeric or inductive effects. This makes the pi system more nucleophilic. In terms of regioselectivity, some existing substituent groups on the aromatic ring promote further substitution at the *ortho-* or *para*-position(s) with respect to themselves. Other groups favor further substitution at the *meta-*position. Those groups are known to the person skilled in the art. Substituents exhibiting a +I or +M effect direct to the *ortho-* and/or *para*-position with respect to themselves. Substituents exhibiting a -I or -M effect direct to the *meta-position.* As known to the person skilled in the art, an M effect of a substituent is in principle more important than an I effect. This means that a +M effect can overrule a small -I effect.

According to the present invention, it was found that the compound of formula (I) requires an additional substituent other than the carbonate group in order for the reaction of the present invention to work. Thus, in formula (I) m has to be at least 1 for both R¹ and R², i.e. there is at least one R¹ and at least one R² substituent attached at the aromatic rings. Furthermore, it was found that said at least one R¹ substituent and said at least one R² substituent must exhibit a +M effect for the described reaction to work. These substituents are preferably beneficial with respect to selectivity and/or reactivity of the reaction. Therefore, each m in formula (I), (IIIa) and (IIIb), respectively, independently is 1 to 4, preferably 1 to 3, more preferably 2 or 3, more preferably 1 or 2, more preferably 1 or 3, most preferably 1, most preferably 2, most preferably 3, most preferably 4. The person skilled in the art knows that steric effects need to be considered, too, because a bulky substituent at the aromatic rings might affect the resulting product. Accordingly, by choosing the R¹ and/or R² substituent(s) of the aromatic ring, the person skilled in the art is able to tailor the structure of the resulting polycarbonate.

It was found that the process according to the present invention can be used to obtain a regular polymer backbone having a linking group (-C(=O)R³C(=O)-) or -C(=O)R⁴C(=O)OR⁵OC(=O)R⁴C(=O)- between two linked aromatic moieties which is either in *ortho-, meta- or para-position* with respect to the carbonate group. According to the present invention, *ortho-, meta-* or *para-* always refer to the position at the aromatic ring with respect to the mandatory carbonate group at the same ring, if not stated otherwise. The existing carbonate group has a small +M effect, directing an electrophile to the *para-position* with respect to the carbonate group. However, this effect can be overruled by additional substituents at the aromatic rings. According to the present invention, each R¹ and R² in formula (I) and/or (IIIa) and/or (IIIb) independently represents an additional R¹ and R² substituent, respectively, being capable of activating the aromatic ring which it substitutes by a mesomeric effect and/or an inductive effect, with the proviso that at least one R¹ substituent and additionally at least one R² substituent exhibits a +M effect. Preferably, all additional R¹ and/or R² substituents exhibit a +M effect. Moreover, m in formula (I) and in formula (IIIa) or (IIIb) is 1 to 4, preferably 1 to 3. This means that at least one additional R¹ and at least one additional R² substituent is present. The at least one additional R¹ and R² substituents are required to activate the aromatic ring. This means that the reactivity towards the electrophilic aromatic substitution is established by the at least one additional R¹ and R² substituent in comparison to a substrate that only comprises a carbonate group (i.e. m would be 0). Furthermore, it has been found that the at least one additional R¹ and R² substituent typically overrule the para-directing effect of the carbonate group, so that a very selective reaction takes place and a regular polymer can be found which has an *ortho-* or *meta*-linkage with respect to the carbonate group. If, for example, the at least one R¹ and/or R² substituent has a *para*-directing effect (i.e. the at least one R¹ and/or R² substituent is capable of directing an electrophile to a position at the aromatic ring which is in *para-position* with respect to the at least one R¹ and/or R² substituent, respectively) and this at least one R¹ and/or R² substituent is in *ortho-position* with respect to the carbonate group substituting the same aromatic ring, a *meta-linkage* with respect to the carbonate group is obtained. Thus, a selective coupling takes place wherein a polycarbonate is obtained which comprises essentially *meta*-linkages. If, in turn, at least one *para-directing* R¹ and/or R² substituent is present which is in *meta-position* with respect to the carbonate group substituting the same aromatic ring, an *ortho*-linkage and *para*-linkage with respect to the carbonate group is obtained. It is to be noted that a "para-directing" R¹ and/or R² substituent is generally to be understood as *ortho-* and *para-* directing substituent (in contrast to substituent that solely directs to a *meta-*position). The skilled person knows that a substituent may either be *ortho-*/*para*-directing or *meta*-directing. Transferred to the present case, the "para-directing" R¹ and/or R² substituent principally directs in *ortho-* and *para*-position. In case that such a "*para*-directing" R¹ and/or R² substituent (which is generally *ortho-* and *para*-directing) is present in *ortho*-position with respect to the carbonate group (substituting the same aromatic ring), sterical hindrance leads to a fully para-selective substitution (leading to meta-linkages with respect to the carbonate group). In this case no ortho-substitution is observed. However, in case that the "*para*-directing" R¹ and/or R² substituent (which is generally *ortho-* and para-directing) is present in *meta-*position with respect to the carbonate group (substituting the same aromatic ring), less sterical hindrance occurs and both *ortho-* and para-substitution can be observed (leading to *ortho-* and para-linkages with respect to the carbonate group). Examples for such para-directing substituents are alkoxy groups.

The at least one R¹ and/or R² substituent can also be positioned in *para*-position with respect to the carbonate group at the same aromatic ring. The person skilled in the art knows how the directing effect of the additional R¹ and/or R² substituent(s) and their position at the aromatic ring with respect to the carbonate group substituting the same aromatic ring can influence the resulting linkages in the polycarbonate. The effect of a selective reaction is even more pronounced if two or three R¹ and/or R² substituents are present in addition to the carbonate group which are capable due to their chemical nature to direct the electrophile to the very same carbon atom. The person skilled in the art knows how more substituents affect the resulting polycarbonate.

Additionally, the compound of formula (IIa) or (IIb) and (IV) determines the structure of the linking group -C(=O)R³C(=O)- or -C(=O)R⁴C(=O)OR⁵OC(=O)R⁴C(=O)- in formulas (IIIa) or (IIIb), respectively. The compound of formula (IIa) is a diacyl halide, preferably a diacyl chloride or diacyl bromide, bearing an R³ substituent which can be an alkyl group having 1 to 20 carbon atoms or an alkylene group having 1 to 20 carbon atoms, wherein this alkyl or alkylene group is optionally interrupted by at least one hetero atom, carbonyl group with ester or ketone functionality, a thioester group, or a combination of these. Alternatively, R³ represents an optionally substituted cycloalkyl group having 6 to 12 carbon atoms in total or an optionally substituted cycloalkylene group having 6 to 12 carbon atoms in total. Alternatively, R³ represents an optionally substituted phenyl group having 6 to 12 carbon atoms in total. Accordingly, R³ in the linking group is any of the groups discussed above, depending on what R³ represents in the compound of formula (IIa). The compound of formula (IIb), in turn, is an anhydride bearing an R⁴ substituent which can be an alkyl group or an alkylene group. Moreover, the compound of formula (IV) is a diol bearing an R⁵ substituent which can be an alkyl group or an alkylene group. Accordingly, R⁴ and/or R⁵ in the linking group can be an alkyl or alkylene group, depending on what R⁴ and/or R⁵ represent in the compound of formula (IIb) and (IV), respectively. The person skilled in the art knows that steric effects need to be considered, too, as a bulky substituent might affect the resulting product. Yet, the carbon atoms of the R³, R⁴ and/or R⁵ substituent can be linear or branched. Additionally, in case R³, R⁴ and/or R⁵ represent an alkylene group this alkylene group may comprise one or more double bonds between adjacent carbon atoms. Altogether, by choosing the R³, R⁴ and/or R⁵ substituents of the compounds of formula (IIa) or (IIb) and (IV), the person skilled in the art is able to tailor the structure of the resulting linking group in the repeating unit with a structure of formula (IIIa) or (IIIb) and therefore, the skilled person is able to tailor the structure of the polycarbonate as a whole.

"Alkyl" in the context of the invention, for example and if not mentioned differently, refers to a linear or branched hydrocarbon which is saturated and therefore, it comprises only single bonds between adjacent carbon atoms. Preferably, alkyl groups according to the present invention have 1 to 20 carbon atoms. Moreover, the alkyl groups according to the present invention may be interrupted by at least one hetero atom, i.e. any atom but a carbon atom, at least one carbonyl group with ester or ketone functionality or a combination of these. The alkyl structures can be limited in choice, in case the invention defines the carbon atoms of an alkyl group in a different manner. Hetero atoms may e.g. be selected from N, O or S.

"Alkylene" in the context of the invention, for example and if not mentioned differently, refers to a linear or branched hydrocarbon which is unsaturated and therefore, it comprises one or more double bonds between adjacent carbon atoms, in addition to single bonds. Preferably, alkylene groups according to the present invention have 1 to 20 carbon atoms. Moreover, the alkylene groups according to the present invention may be interrupted by at least one hetero atom, i.e. any atom but a carbon atom, at least one carbonyl group with ester or ketone functionality or a combination of these. These structures can be limited in choice, in case the invention defines the carbon atoms of an alkylene group in a different manner. Hetero atoms may e.g. be selected from N, O or S.

"Cycloalkyl" in the context of the invention, for example and if not mentioned differently, refers to a carbocyclic hydrocarbon which is saturated and therefore, it comprises only single bonds between adjacent carbon atoms. Preferably, cycloalkyl groups according to the present invention have 6 to 12 carbon atoms. They can be mono- or polycyclic. Preferred examples for a C₆ to C₁₂ cycloalkyls are cyclohexane, cycloheptane, cyclooctane, cyclodecane, cycloundecane or cyclododecane. Most preferred is cyclohexane.

"Cycloalkylene" in the context of the invention, for example and if not mentioned differently, refers to a carbocyclic hydrocarbon which is unsaturated and therefore, it comprises one or more double bonds between adjacent carbon atoms, in addition to single bonds. Preferably, cycloalkylene groups according to the present invention have 6 to 12 carbon atoms. They can be mono- or polycyclic. Preferred examples for a C₆ to C₁₂ cycloalkyls are cyclohexene, cycloheptene, cyclooctene, cyclodecene, cycloundecene or cyclododecene. Most preferred is cyclohexene.

"Alkoxy" in the context of the invention, for example and if not mentioned differently, refers to a linear or branched alkyl group singularly bonded to oxygen (-OR). Preferably, alkoxy groups according to the present invention have 1 to 6 carbon atoms and thus, comprise methoxy, ethoxy, n-propoxy, isopropoxy, n-butoxy, sec-butoxy, tert-butoxy, n-pentoxy, 1-methylbutoxy, 2-methylbutoxy, 3-methylbutoxy, neopentoxy, 1-ethylpropoxy, cyclohexoxy, cyclopentoxy, n-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

The above enumerations should be understood by way of example and not as a limitation.

A "halogen atom" in the context of the invention, if not mentioned differently, refers to fluorine (F), chlorine (Cl), bromine (Br), or iodine (I). Preferably, a halogen atom is F, Cl, Br or I, more preferably it is Cl or Br.

Furthermore, formulas (IIIa) and (IIIb) recite "n" as number of repeating units. n is 6 to 60, more preferably it is 10 to 55, even more preferably it is 20 to 50, still more preferably it is 25 to 45 and most preferably it is 30 to 40. Depending on the length of the yielded polycarbonate (so depending on the number n of repeating units), physical, chemical and mechanical properties of the polycarbonate may vary. Depending on the number of repeating units, microscopic and/or macroscopic structures of the polycarbonate may change as well. By the preferred number n of repeating units, an optimum balance between processability and mechanical properties of the yielded polycarbonate can be established. Consequently, the skilled person may choose the number of n to tailor dedicated properties of the polycarbonate.

According to the present invention, it was found that a Lewis acid is required for the reaction. The Lewis acid acts as a catalyst. In such a function the Lewis acid catalyst acts as an electron pair acceptor, thereby increasing the reactivity of a substrate. In addition to accelerating reactions, Lewis acid catalysts are able to impose regioselectivity and stereoselectivity in many cases. The term "Lewis acid" is known to the person skilled in the art. Preferably, a metal- or transition metal-based Lewis acid catalyst is used for the reaction.

In a preferred embodiment of the invention, a process is provided wherein at least one R¹ substituent and/or at least one R² substituent represents a substituent, preferably with a +M effect, being capable of directing an electrophile to a position at the aromatic ring which is in *ortho-* or *para*-p*o*sition, preferably *para-*position, with respect to the at least one R¹ substituent and/or R² substituent, respectively. The at least one R¹ and/or R² substituent typically increases the reactivity of the aromatic ring. This preferably means that the reactivity towards the electrophilic aromatic substitution is increased in comparison to a substrate that only comprises a carbonate group (and each m is 0). It has been found that the at least one R¹ and/or R² substituent typically overrules the *para*-directing effect of the carbonate group which exhibits a small +M effect only. As a result, a regular polymer can be found which has an *ortho-* or *meta-linkage,* depending on the position of the at least one R¹ and/or R² substituent at the aromatic ring. An example for R¹ and/or R² substituents which exhibit a +M effect and are able to direct an electrophile to a position at the aromatic ring which is in *ortho-* or *para*-position, preferably *para*-position, with respect to themselves are alkoxy groups. Since alkoxy groups exhibit a bigger +M effect than a carbonate group, they are able to overrule the para-directing effect of the carbonate group.

Furthermore, it is preferred that at least one R¹ substituent and/or at least one R² substituent is in *ortho-*position with respect to the carbonate group substituting the same aromatic ring. Preferably, both the at least one R¹ and R² substituent are in *ortho-position.* The at least one R¹ and/or R² substituent of this preferred embodiment can but do not have be identical with the at least one R¹ and/or at least one R² substituent being capable of directing an electrophile to a position at the aromatic ring which is in *ortho-* or *para*-position, preferably *para*-position, with respect to the at least one R¹ and/or R² substituent, respectively.

Moreover, preferably a process is provided, wherein each R¹ substituent and each R² substituent independently represents an alkyl group or an alkoxy group, more preferably an alkyl or alkoxy group having 1 to 6 carbon atoms. They can be linear or branched. Alkyl groups exhibit a +I effect, alkoxy groups exhibit a +M effect. A substituent which has 1 to 6 carbon atoms is preferred for steric reasons. Thus, preferably each R¹ substituent and each R² substituent independently represents methyl, ethyl, n-propyl, isopropyl, n-butyl, sec-butyl, *tert-butyl,* n-pentyl, 1-methylbutyl, 2-methylbutyl, 3-methylbutyl, neopentyl, 1-ethylpropyl, cyclohexyl, cyclopentyl, n-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, n-propoxy, isopropoxy, n-butoxy, sec-butoxy, tert-butoxy, n-pentoxy, 1-methylbutoxy, 2-methylbutoxy, 3-methylbutoxy, neopentoxy, 1-ethylpropoxy, cyclohexoxy, cyclopentoxy, n-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

Overall, the person skilled in the art knows how the choice of any compound of formula (I) has an effect on the resulting polycarbonate comprising a repeating unit with a structure of formula (IIIa) or (IIIb). Thus, he or she is able to predict the influences of the structure of the compound of formula (I). Preferably, the compound of formula (I) is selected from guaiacol carbonate or bis(2-methoxy-4-propylphenyl) carbonate. For guaiacol carbonate, m is 1 for R¹ as well as for R² and both the R¹ and R² substituent are a methoxy group, each located in *ortho-position* with respect to the carbonate group substituting the same aromatic ring. For bis(2-methoxy-4-propylphenyl) carbonate, m is 2 for R¹ as well as for R², wherein one R¹ and one R² substituent are a methoxy group, each located in *ortho-position* with respect to the carbonate group substituting the same aromatic ring and one R¹ and one R² substituent are an n-propyl group, each located in *para-position* with respect to the carbonate group substituting the same aromatic ring. The named exemplary diaryl carbonates which are substituted with at least one R¹ and at least one R² substituent exhibiting a +M effect (here: methoxy) - wherein these substituents are in *ortho-position* with respect to the carbonate group substituting the same aromatic ring and both are capable of directing an electrophile to a position at the aromatic ring which is in *para-position* with respect to themselves - were successfully coupled with an acyl halide, preferably an acyl chloride, in model reactions.

The yielded polycarbonate comprises a repeating unit with a structure of formula (IIIa) or (IIIb). In formula (IIIa) R³ represents an alkyl or alkylene group having 1 to 20 carbon atoms, wherein this alkyl or alkylene group is optionally interrupted by at least interrupted by at least one hetero atom, carbonyl group with ester or ketone functionality, a thioester group or a combination of these. Alternatively, R³ represents an optionally substituted cycloalkyl or cycloalkylene group having 6 to 12 carbon atoms in total or an optionally substituted phenyl group having 6 to 12 carbon atoms in total. Preferably, R³ represents an alkyl or alkylene group not being interrupted and having 1 to 8 carbon atoms. Moreover, both X in formula (II) preferably represent Cl due to easy availability of the compounds. The person skilled in the art knows how the choice of any compound of formula (IIa) has an effect on the resulting polycarbonate comprising a repeating unit with a structure of formula (IIIa). Thus, he or she is able to predict the influences of the structure of the compound of formula (IIa). In a preferred embodiment of the present invention a process is provided, wherein the compound of formula (IIa) is hexanedioyl chloride. Thus, R³ represents a linear alkyl group not being interrupted and having 6 carbon atoms, wherein both X represent Cl. Such a compound could successfully serve as a coupling partner for diaryl carbonates in model reactions. In formula (IIIb), in turn, R⁴ and R⁵ independently represent an alkyl or alkylene group. Accordingly, R⁴ in formula (IIb) and R⁵ in formula (IV) independently represent an alkyl or alkylene group. Again, the person skilled in the art knows how the choice of any compound of formula (IIb) and/or (IV) affect the resulting polycarbonate comprising a repeating unit with a structure of formula (IIIb). Thus, he or she is able to predict the influences of the structure of the compound of formula (IIb) and/or (IV). In a preferred embodiment of the present invention a process is provided, wherein the compound of formula (IIb) is succinic anhydride and the compound of formula (IV) is neopentylglycol. Thus, R⁴ represents a linear alkyl group having 2 carbon atoms, while R⁵ represents a branched alkyl group having 5 carbon atoms. Such compounds were successfully reacted with diaryl carbonates in model reactions.

According to a further preferred embodiment of the present invention, either a halogenated solvent and/or an aromatic solvent or no solvent at all is used. This means that the reaction can be performed neat or in the presence of a halogenated solvent and/or an aromatic solvent. Besides halogenated solvents, also the aromatic solvent toluene was successfully tested as a solvent in model reactions. However, as with toluene undesired side products (based on reactions of toluene with the acyl halide, e.g. acyl chloride) were observed, preferably a halogenated solvent is used. In case a solvent is used, it is more preferably selected from dichloromethane, dichloroethane or chlorobenzene because these halogenated solvents were successfully tested as a solvent in model reactions. Most preferably, dichloromethane is used as solvent as this solvent delivered the best yields. Using no solvent may be advantageous regarding ecological aspects.

Preferably, the Lewis acid catalyst used for the reaction is a metal- or transition metal-based Lewis acid catalyst. More preferably, it comprises a metal or transition metal selected (preferably as a metal salt comprising said metal or transition metal) from Al, Zn, Fe, Sc, Ti, Bi, Te, Nb or In, still more preferably Al, Fe or In. The Lewis acid catalyst comprising said metal salt may have a structure of MₓL_{y}, wherein M is a metal or transition metal atom, x is the number of metal or transition metal atoms, L is a suitable organic or inorganic ligand such as Cl, Br, I, OTf or OAc, and y is the number of ligands L. Said ligands L affect the solubility of the Lewis acid as certain combinations of metals (and transition metals) and ligands will not be soluble in the employed solvent. Even more preferably, the Lewis acid catalyst is selected from AlCl₃, ZnBr₂, FeBr₃, FeCl₃, Fe(OAc)₂, Sc(OTf)₃, TiCl₄, BiCl₃, Bi(OTf)₃, TeCl₄, NbCl₅, InCl₃ or In(OTf)₃. All of the listed Lewis acids were capable in promoting coupling between the compound of formula (I) and the compound of formula (IIa) or (IIb), at least when added in a stoichiometric or superstoichiometric amount. Most preferably, AlCl₃, FeBr₃, FeCl₃ or InCl₃ is chosen as a Lewis acid catalyst as these Lewis acids delivered the best yields in model reactions. Among these, AlCl₃ and FeBr₃ is preferred based on price and practical reasons.

In a preferred embodiment of the present invention, the Lewis acid catalyst is added in an amount of 0.1 to 6.0 molar equivalents, preferably 1.0 to 6.0 molar equivalents, with respect to the compound of formula (I). The given amounts of Lewis acid catalyst are sufficient to achieve a good yield of the desired polycarbonate. Within this range, a higher amount of Lewis acid is preferred as reducing the amount of the catalyst diminished the yield of the desired product. Relating to the compound of formula (IIa) or (IIb), 1.0 equivalents of FeBr₃ or 4.0 and 6.0 equivalents of AlCl₃, were successfully tested in model reactions, wherein in case of a compound of formula (IIa), this applies in particular with respect to an acyl chloride moiety.

According to the present invention, the process comprises a reaction, wherein a compound of formula (I) is reacted with a compound of formula (IIa) or (IIb). The compound of formula (I) is a diaryl carbonate, the compound of formula (IIa) is an acyl halide, preferably an acyl chloride, the compound of formula (IIb) is an anhydride. Moreover, the compound of formula (IIa) or (IIb) is preferably added in an amount of 0.5 to 3.0 molar equivalents with respect to the compound of formula (I). It was found that having 0.5 to 3.0 equivalents of the compound of formula (IIa) or (IIb) with respect to the compound of formula (I) is beneficial for obtaining a good yield.

Preferably, the reaction is carried out at a reaction temperature of 30 to 40 °C, most preferably 40 °C. It has been found that these reaction conditions are beneficial for the yield of the desired polycarbonate. In particular, it has been found that raising the reaction temperature from 30 to 40 °C is beneficial for the yield. However, the person skilled in the art is able to adapt the reaction temperature and the reaction time in order to optimize yields.

Additionally, it is preferred that the reaction is carried out under inert atmosphere so that no oxygen can hamper the desired reaction and the yield of the desired polycarbonate.

In another aspect of the present invention, polycarbonates obtainable by the process of the present invention are provided. Those polycarbonates exhibit improved properties, in particular with respect to mechanical and/or optical properties, heat resistance and/or weatherability.

The definitions/explanations given above in context of the described process can directly be transferred to the polycarbonate described before and after this passage. All mandatory or preferred/advantageous features described in relation to the process according to the invention may form mandatory or preferred/advantageous features of the polycarbonate according to the invention as well.

As mentioned before, the objects of the present invention are (at least partially) solved by a polycarbonate.

In particular, the invention relates to a polycarbonate comprising a repeating unit with a structure of formula (IIIa) 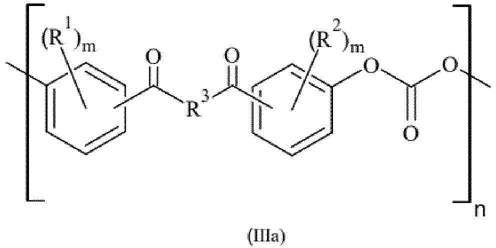
wherein the repeating unit with the structure of formula (III) comprises two aromatic rings, a carbonate group -OC(=O)O- and a linking group -C(=O)R³C(=O)-, wherein one of the two aromatic rings is substituted with the carbonate group, the two aromatic rings are linked *via* the linking group and the linking group in each repeating unit independently is either in *ortho-, meta- or para-position* with respect to the carbonate group,
   or (IIIb) 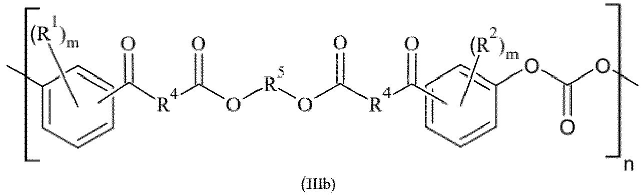
wherein the repeating unit with the structure of formula (IIIb) comprises two aromatic rings, a carbonate group -OC(=O)O- and a linking group -C(=O)R⁴C(=O)OR⁵OC(=O)R⁴C(=O)-, wherein one of the two aromatic rings is substituted with the carbonate group, the two aromatic rings are linked *via* the linking group and the linking group in each repeating unit independently is either in *ortho-, meta- or para-*position with respect to the carbonate group,
and wherein
- each m independently is 1 to 4, preferably 1 to 3,
- each R¹ and R² independently represents an R¹ substituent and an R² substituent, respectively, being capable of activating the aromatic ring which it substitutes by a mesomeric effect and/or an inductive effect, with the proviso that at least one R¹ substituent and additionally at least one R² substituent exhibits a +M effect,
- R³ represents
   ∘ an alkyl or alkylene group having 1 to 20 carbon atoms, wherein this alkyl or alkylene group is optionally interrupted by at least one hetero atom, carbonyl group with ester or ketone functionality, a thioester group or a combination of these,
   ∘ an optionally substituted cycloalkyl or cycloalkylene group having 6 to 12 carbon atoms in total,
   ∘ an optionally substituted phenyl group having 6 to 12 carbon atoms in total,
- R⁴ represents an alkyl or alkylene group,
- R⁵ represents an alkyl or alkylene group, and
- n is the number of repeating units and is 6 to 60.

With respect to the polycarbonate, preferably, at least one R¹ substituent and/or at least one R² substituent is in *ortho-position* with respect to the carbonate group substituting the same aromatic ring.

With respect to the polycarbonate, preferably, the linking group in each repeating unit independently is in *meta-position,* with respect to the carbonate group.

With respect to the polycarbonate, preferably, each R¹ substituent and each R² substituent independently represents an alkyl group or an alkoxy group, preferably an alkyl or alkoxy group having 1 to 6 carbon atoms, more preferably methyl, ethyl, n-propyl, isopropyl, n-butyl, sec-butyl, *tert-butyl,* n-pentyl, 1-methylbutyl, 2-methylbutyl, 3-methylbutyl, neopentyl, 1-ethylpropyl, cyclohexyl, cyclopentyl, n-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n*-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

With respect to the polycarbonate, preferably, R³ represents an alkyl or alkylene group not being interrupted and having 1 to 8 carbon atoms.

### Brief description of the Figure

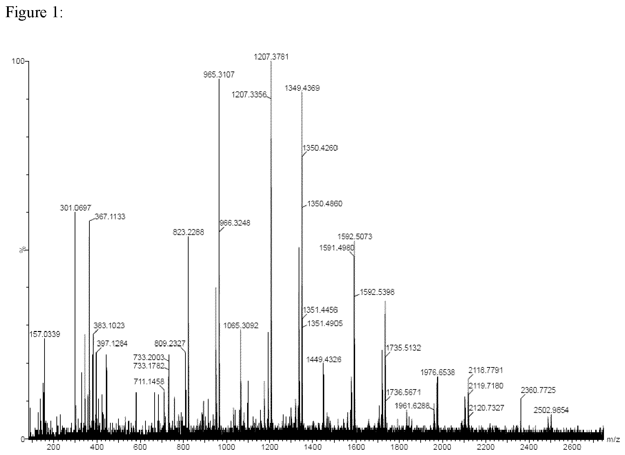

Figure 1. Nano-electrospray mass spectrum in DMSO of inventive example 73.

### Examples

The following examples are used to describe the invention. It is to be noted that sometimes reactions are studied that do not represent polymerizations, but rather study the coupling (linking) of one aromatic moiety with another aromatic moiety (*via* a linking group), wherein at least one of those moieties comprises a carbonate group. However, based on those examples, the person skilled in the art can easily conclude that and how a polymerization reaction as such can be performed. Also, certain examples (experiments) did not lead to successful reactions or yield. These examples are indicated as "comparative example", wherein examples leading to desired reaction product in a desirable yield are indicated as "reference example". It may be understood as part of the disclosed invention, but not necessarily being claimed. These examples may be referred to as model reactions or alternatives with respect to the claimed subject-matter.

### Materials used in the examples

### A) Commercially available chemicals

All solvents and commercially available reagents were used as received.

| Chemical | CAS-number | Supplier | Purity (GC) |
|---|---|---|---|
| Triethylamine (NEt₃) | 121-44-8 | Acros Organics | 99% |
| Pyridine | 110-86-1 | Acros Organics | 99.5%, extra dry |
| 2-Methoxyphenol | 90-05-1 | Acros Organics | 99% |
| 3-Methoxyphenol | 150-19-6 | Acros-Organics | 97% |
| 2,6-Dimethoxyphenol | 91-10-1 | Acros Organics | 99% |
| 2,6-Dimethylphenol | 576-26-1 | Sigma-Aldrich | 99% |
| 2-Methoxy-4-propylphenol | 2785-87-7 | Sigma-Aldrich | 99% |
| 4-Hydroxy-3-*tert*-butylanisole | 121-00-6 | TCI | >98% |
| 4-Dimethylaminopyridine (DMAP) | 1122-58-3 | Fluorochem | 99% |
| Methyl chloroformate | 79-22-1 | Acros Organics | 99% |
| Hydrochloric acid (HCl) | 7647-01-0 | Fisher Chemical | analytical reagent grade (36%) |
| Sodium hydroxide (NaOH) | 1310-73-2 | Acros Organics | 98% |
| Methyl phenyl carbonate | 13509-27-8 | Fluorochem | 97% |
| Diphenyl carbonate | 102-09-0 | TCI | 99% |
| Guaiacol carbonate | 553-17-3 | TCI | >98% |
| Ethylene carbonate | 96-49-1 | Sigma-Aldrich | 98% |
| Magnesium perchlorate | 10034-81-8 | Sigma-Aldrich | ACS grade |
| Dimethyl dicarbonate | 4525-33-1 | Sigma-Aldrich | ACS grade |
| Benzoyl chloride | 98-88-4 | Acros Organics | >98% |
| Valeroyl chloride | 638-29-9 | Sigma-Aldrich | 98% |
| Hexanedioyl dichloride | 111-50-2 | Acros Organics | 98% |
| Methyl succinyl chloride | 1490-25-1 | Acros Organics | 97% |
| Succinic anhydride | 108-30-5 | TCI | >95% |
| Neopentylglycol | 126-30-7 | Acros Organics | 99% |
| *p*-Toluene sulfonic acid hydrate | 6192-52-5 | Sigma Aldrich | >98.5% |
| Magnesium sulfate (MgSO₄) | 22189-08-8 | Acros-Organics | 99%, extra pure, dried |
| Celite | 68855-54-9 | Chem-Lab NV | not indicated |
| Sodium chloride (NaCl) | 7647-14-5 | Acros-Organics | 99.5% |
| Silica (SiO₂) | 7631-86-9 | Macherey-Nagel | particle size 40-63 µm, pore diameter 60 Å |
| Deuterated chloroform (CDCl₃) | 865-49-6 | Eurisotop | 99.8% D |
| FeBr₃ | 10031-26-2 | Sigma-Aldrich | 98% |
| FeCl₃ | 7705-08-0 | Alfa Aesar | 98% |
| Fe(OAc)₂ | 3094-87-9 | Sigma-Aldrich | 99.98% trace metal analysis |
| TiCl₄ | 7550-45-0 | Acros Organics | 99.9% |
| AlCl₃ | 7446-70-0 | Sigma-Aldrich | 99.98% trace metal analysis |
| Al(OTf)₃ | 74974-61-1 | Acros | 99% |
| ZnCl₂ | 7646-85-7 | Sigma-Aldrich | 99.9% |
| ZnBr₂ | 7699-45-8 | Acros Organics | >98% |
| Sc(OTf)₃ | 144026-79-9 | Fluorochem | 99% |
| Yb(OTf)₃ | 54761-04-5 | Sigma-Aldrich | 99.98% trace metal analysis |
| BiCl₃ | 7787-60-2 | Acros Organics | 99.98% trace metal analysis |
| Bi(OTf)₃ | 88189-03-1 | Alfa Aesar | 99% |
| TeCl₄ | 10026-07-0 | Sigma-Aldrich | 99% |
| NbCl₅ | 10026-12-7 | Sigma-Aldrich | 99.98% trace metal analysis |
| SeCl₄ | 10026-03-6 | Sigma-Aldrich | 98% |
| InCl₃ | 10025-82-8 | Strem Chemicals | 99.98% trace metal analysis |
| In(OTf)₃ | 128008-30-0 | Fluorochem | 98% |
| Acetonitrile (ACN) | 75-05-8 | Fisher Chemical | 99.8%, analytical reagent grade |
| Chlorobenzene (dry) | 108-90-7 | Acros Organics | 99.9%, extra dry |
| Dichloromethane (dry, DCM) | 75-09-2 | Acros Organics | >99%, extra dry |
| Dichloromethane (DCM) | 75-09-2 | Fisher Chemical | 99.8%, analytical reagent grade |
| Dichloroethane (dry) | 107-06-2 | Acros Organics | 99.5%, extra dry |
| Dimethylsulfoxide (DMSO) | 67-68-5 | Fisher Chemical | 99.8%, analytical reagent grade |
| Ethyl acetate (EtOAc) | 141-78-6 | Fisher Chemical | 99.8%, analytical reagent grade |
| Heptane | 64742-49-0 | Fisher Chemical | extra pure, but distill prior to use |
| Methanol | 67-56-1 | Fisher chemical | 99.8%, analytical reagent grade |
| Toluene (dry) | 108-88-3 | Acros Organics | 99.5%, extra dry |
| Tetrahydrofuran (dry) | 109-99-9 | Acros Organics | 99.5%, extra dry |
| *tert*-Butyl methyl ether (MTBE) | 1634-04-4 | Fisher Chemical | extra pure, SRL |

### B) Non-commercial chemicals

### General procedure 1:

A round-bottomed flask equipped with a stir bar was charged with the substituted phenol (1.0 equiv), triethylamine (1.2 equiv) and dichloromethane (25 mL). The mixture was cooled to 0 °C in an ice-water bath. Subsequently, methyl chloroformate (1.2 equiv) was added dropwise over a period of 10 minutes. The mixture was stirred at room temperature for the indicated time. The precipitate was filtered off over a paper filter. The filtrate was extracted with HCl (1 M, 1 x 30 mL), NaOH (0.5 M, 30 mL) and with saturated aqueous NaCl solution (1 x 30 mL). The organic layer was dried over anhydrous MgSO₄, filtered and concentrated *in vacuo.* The product was purified as indicated.

### 2-Methoxyphenyl methyl carbonate

General procedure 1 was applied using 2-methoxyphenol (1.241 g, 10.0 mmol), NEt₃ (1.7 mL, 12.0 mmol) and methyl chloroformate (980 µL, 9.6 mmol) for 2 h. The product was obtained in 80% (1.455 g) yield.

White solid, m.p.: 31-32 °C, ¹H NMR (400 MHz, CDCl₃): δ 7.28-7.24 (m, 1H), 7.19 (dd, *J* = 7.9, 1.6 Hz, 1H), 7.15 (dd, *J* = 8.3, 1.3 Hz, 1H), 6.97 (td, *J* = 7.7, 1.5 Hz, 1H), 3.81 (s, 3H), 3.79 (s, 3H) ppm. ¹³C NMR (101 MHz, CDCl₃): δ 153.3 (C), 150.9 (C), 139.5 (C), 127.3 (CH), 122.4 (CH), 120.6 (CH), 113.0 (CH), 55.8 (CH₃), 55.5 (CH₃) ppm. HRMS for C₉H₁₁O₄ [M+H]⁺ calcd. 183.0652, found 183.0653.

### 2-Methoxy-4-propylphenyl methyl carbonate

A dry 100 mL round-bottomed flask equipped with a stir bar was charged with magnesium perchlorate (223 mg, 1.0 mmol), 2-methoxy-4-propylphenol (8.01 mL, 50 mmol) and dimethyl dicarbonate (10.7 mL, 100 mmol). The flask was flushed with argon and equipped with a reflux condenser. The mixture was stirred at 40 °C for 17 h. After cooling to room temperature, the mixture was filtered over a plug of Celite with MTBE (50 mL). The filtrate was evaporated (2 mbar, 60 °C) for 3 h. Vacuum distillation (96 °C, 0.14 mbar) gave the product in 92% (2.20 g) yield.

Colorless oil, ¹H NMR (400 MHz, CDCl₃): δ 7.02 (d, *J =* 8.0 Hz, 1H), 6.79 (d, *J* = 1.7 Hz, 1H), 6.75 (dd, *J* = 8.1, 1.9 Hz, 1H), 3.89 (s, 3H), 3.84 (s, 3H), 2.58 (t, *J =* 7.5 Hz, 2H), 1.65 (sext, *J* = 7.4 Hz, 2H), 0.96 (t, *J =* 7.4 Hz, 3H) ppm. ¹³C NMR (101 MHz, CDCl₃): δ 154.2 (C), 150.9 (C), 142.1 (C), 138.2 (C), 122.0 (CH), 120.6 (CH), 112.9 (CH), 56.0 (CH₃), 55.5 (CH₃), 38.1 (CH₂), 24.6 (CH₂), 13.9 (CH₃) ppm. HRMS (ESI) for C₁₂H₁₆O₄Na [M+Na]⁺ calcd. 247.0941, found 247.0935.

### 3-Methoxyphenyl methyl carbonate

General procedure 1 was applied using 3-methoxyphenol (880 µL, 8.0 mmol), NEt₃ (1.4 mL, 9.6 mmol), 4-dimethylaminopyridine (49 mg, 5 mol%), and methyl chloroformate (930 µL, 9.6 mmol). The mixture was stirred for 3 h. The product was obtained in 67% (970 mg) yield.

Yellow oil, ¹H NMR (400 MHz, CDCl₃): δ 7.28 (t, *J* = 8.2 Hz, 1H), 6.81-6.77 (m, 2H), 6.74 (t, *J =* 2.3 Hz, 1H), 3.90 (s, 3H), 3.80 (s, 3H) ppm. ¹³C NMR (101 MHz, CDCl₃): δ 160.7 (C), 154.3 (C), 152.2 (C), 130.0 (CH), 113.3 (CH), 112.1 (CH), 107.1 (CH), 55.6 (CH₃), 55.5 (CH₃) ppm. HRMS (ESI) for C₉H₁₁O₄ [M+H]⁺ calcd. 183.0652, found 183.0653.

### 2,6-Dimethoxyphenyl methyl carbonate

A dry 100 mL round-bottomed flask equipped with a stir bar was charged with magnesium perchlorate (446 mg, 2.0 mmol), 2,6-dimethoxyphenol (3.08 g, 20.0 mmol) and dimethyl dicarbonate (4.3 mL, 40.0 mmol). The flask was flushed with argon and equipped with a reflux condenser. The mixture was stirred at 40 °C for 72 h. After cooling to room temperature, the mixture was filtered over a plug of Celite with MTBE (50 mL). The filtrate was evaporated (2 mbar, 60 °C) for 3 h. The product was obtained in 98% (4.3 g) yield.

Yellow solid, m.p.: 55-56 °C, ¹H NMR (400 MHz, CDCl₃): δ 7.14 (t, *J* = 8.5 Hz, 1H), 6.61 (d, *J* = 8.5 Hz, 2H), 3.91 (s, 3H), 3.84 (s, 6H) ppm. ¹³C NMR (101 MHz, CDCl₃): δ 153.9 (C), 152.6 (C), 129.5 (C), 126.6 (CH), 105.1 (CH), 56.3 (CH₃), 55.7 (CH₃) ppm. HRMS (ESI) for C₁₀H₁₂O₅Na [M+Na]⁺ calcd. 235.0576, found 235.0583.

### 2,6-Dimethylphenyl methyl carbonate

General procedure 1 was applied using 2,6-dimethylphenol (1.833 g, 15.0 mmol), pyridine (1.0 mL, 15.8 mmol) and methyl chloroformate (1.5 mL, 15.8 mmol). The mixture was stirred overnight. The product was obtained in 33% (885 mg) yield.

Colorless oil, ¹H NMR (400 MHz, CDCl₃): δ 7.07 (s, 3H), 3.92 (s, 3H), 2.22 (s, 6H) ppm. ¹³C NMR (101 MHz, CDCl₃): δ 153.7 (C), 148.5 (C), 130.3 (C), 128.9 (CH), 126.2 (CH), 55.7 (CH₃), 16.1 (CH₃) ppm.

### 2-(tert-Butyl)-4-methoxyphenyl methyl carbonate

General procedure 1 was applied using 4-hydroxy-3-*tert*-butylanisole (1.802 g, 10.0 mmol), NEt₃ (1.7 mL, 12.0 mmol) and methyl chloroformate (1.2 mL, 12.0 mmol). The mixture was stirred overnight. The product was purified by an automated flash chromatography system using a heptane/EtOAc gradient (from 100% heptane to 5% EtOAc in 40 min, 25 mL/min). The product was obtained in 47% (1.115 g) yield.

Colorless oil, ¹H NMR (400 MHz, CDCl₃): δ 7.01 (d, *J =* 8.8 Hz, 1H), 6.92 (d, *J =* 3.0 Hz, 1H), 6.74 (dd, *J* = 8.8, 3.0 Hz, 1H), 3.91 (s, 3H), 3.80 (s, 3H), 1.35 (s, 9H) ppm. ¹³C NMR (101 MHz, CDCl₃): δ 157.3 (C), 155.0 (C), 143.7 (C), 142.6 (C), 124.2 (CH), 113.9 (CH), 110.9 (CH), 55.7 (CH₃), 55.5 (CH₃), 34.8 (C), 30.2 (CH₃) ppm. HRMS (ESI) for C₁₃H₁₈O₄K [M+K]⁺ calcd. 277.0837, found 277.0828.

### Bis(2-methoxy-4-propylphenyl) carbonate

A reactor was charged with 2-methoxy-4-propylphenol (83.1 g, 0.5 mol), pyridine (79.1 g, 1.0 mol) and dichloromethane (606 mL). The temperature was maintained at 25 °C *via* a thermostatic bath, before phosgene (27.2 g, 0.28 mol) was added over a period of 15 minutes. The mixture was flushed with nitrogen for 45 minutes, before it was washed twice with an aqueous HCl solution (10%, 400 mL) and three times with H₂O (400 mL). The solvent was removed and the product dried overnight at room temperature under vacuum. The product was obtained in 99% yield (88.95 g).

White solid, m.p.: 66-67 °C, ¹H NMR (400 MHz, CDCl₃): δ 7.13 (d, *J =* 8.1 Hz, 2H), 6.81 (d, *J =* 1.7 Hz, 2H), 6.77 (dd, *J =* 8.1, 1.8 Hz, 2H), 3.89 (s, 6H), 2.75-2.21 (m, 4H), 1.75-1.60 (m, 4H), 0.96 (t, *J =* 7.3 Hz, 6H) ppm. ¹³C NMR (101 MHz, CDCl₃): δ 151.8 (C), 150.9 (C), 142.1 (C), 138.4 (C), 122.0 (CH), 120.6 (CH), 113.1 (CH), 56.2 (CH₃), 38.1 (CH₂), 24.6 (CH₂), 13.9 (CH₃) ppm. HRMS for C₂₁H₂₆O₅Na[M+Na]⁺ calcd. 381.1672, found 381.1674.

### General considerations and methods

Nuclear magnetic resonance (NMR) spectra were recorded on a Bruker Avance III 400 (101 MHz for ¹³C) Fourier Transform NMR spectrometer at 300 K (unless stated otherwise), using the non or partly deuterated solvent as internal standard (¹H: *δ* = 7.26 ppm, ¹³C: *δ* = 77.16 ppm for CDCl₃). Chemical shifts (*δ*) are given in ppm and coupling constants (*J*) are reported in Hertz (Hz). Multiplicities are described as s (singlet), d (doublet), t (triplet), q (quartet), br s (broad singlet) and m (multiplet) or combinations thereof.

High resolution mass spectrometry (HRMS) samples were prepared by dissolving 0.1-5 mg of the compound in DMSO or CH₃CN/H₂O and further diluted to a concentration of 10⁻⁵-10⁻⁶ M. Formic acid (0.1%) was added prior to injection. 10 µL of each sample was injected using the CapLC system (Waters, Manchester, UK) and electrosprayed using a standard electrospray source. Samples were injected with an interval of 3 minutes. Positive ion mode accurate mass spectra were acquired using a Q-TOF II instrument (Waters, Manchester, UK). The MS was calibrated prior to use with a 0.1% H₃PO₄ solution. The spectra were lock mass corrected using the known mass of the nearest H₃PO₄ cluster or a known background ion. Analytes were detected as protonated or as a sodium adduct. All measured masses are within a difference of 5 ppm compared to the calculated mass unless specified otherwise.

Nano-electrospray mass analysis samples were prepared by dissolving 4 mg of the obtained solid in 1 mL of DMSO. This mixture was diluted by taking 10 µL and dissolving it in 990 µL DMSO and taking 100 µL from this solution and adding 900 µL of DMSO. The measurement was done by placing 3 µL of the obtained sample in a in a gold-coated borosilicate needle (in-house made). The sample was then sprayed from this needle using a nano-electrospray source (Waters). Positive ion mode accurate mass spectra were acquired using a Q-TOF II instrument (Waters, Manchester, UK).

Flash chromatography was performed either manually on SiO₂ (particle size 40-63 µm, pore diameter 60 Å) using the indicated eluent and visualized by UV detection (254 nm) or on an automated chromatography system (Biotage^{®} One Isolera Automatic Flash) with on-line UV detection using Grace^{®} Silica flash Cartridges.

Thin layer chromatography (TLC) was performed using TLC plates from Merck (SiO₂, Kieselgel 60 F254 neutral, on aluminum with fluorescence indicator) and compounds were visualized by UV detection (254 nm) unless mentioned otherwise.

Melting points were recorded on a Büchi M-565 melting point apparatus and are uncorrected.

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/L, flow rate 1.0 mL/min, at a temperature of 30 °C using UV and/or RI detection.

### Reaction optimization

### A) Preliminary screening of reaction conditions

### General procedure 2:

An oven-dried pressure vial of 10 mL equipped with a stir bar was charged with the indicated Lewis acid under inert atmosphere. Subsequently, 2-methoxyphenyl methyl carbonate (182 mg, 1.0 mmol) dissolved in DCM (1 mL, dry) was added, followed by dropwise addition of benzoyl chloride (116 µL, 1.0 mmol). The vial was sealed and the resulting mixture was stirred for 17 h at 30 °C, before it was quenched by the addition of water (10 mL). After extraction with EtOAc (20 mL), the organic phase was washed with a saturated solution of NaCl (20 mL) and dried over anhydrous MgSO₄, filtered and evaporated to dryness *in vacuo.*

Analysis: A known amount of ethylene carbonate was added as internal standard and everything was dissolved in CDCl₃. A ¹H NMR spectrum was recorded and signals were integrated *versus* the internal standard to determine the yield of the desired product 5-benzoyl-2-methoxyphenyl methyl carbonate.

**Table 1.**

| Example | Type | Lewis acid | Loading (equiv) | Yield (%) |
|---|---|---|---|---|
| 1 | Comparative | / | / | 0 |
| 2 | Reference | AlCl₃ | 3.0 | 61 |
| 3 | Reference | AlCl₃ | 1.0 | 0 |
| 4 | Reference | TiCl₄ | 3.0 | 42 |
| 5 | Reference | TiCl₄ | 1.0 | 21 |
| 6 | Reference | FeBr₃ | 3.0 | 18 |
| 7 | Reference | FeBr₃ | 1.0 | 65 |

Conclusion: The reaction of 2-methoxyphenyl methyl carbonate with benzoyl chloride to obtain 5-benzoyl-2-methoxyphenyl methyl carbonate was studied as a model reaction. Based on the work of Gautret (RSC Adv. **2013,** 3683-3696, for a phenolic substrate without carbonate moiety), AlCl₃ in super stoichiometric amount was attempted as Lewis acid to achieve the desired coupling. Pleasingly, the desired product was obtained in 61%, but also undesired O-demethylation towards 5-benzoyl-2-hydroxyphenyl methyl carbonate occurred (example 2). Lowering the Lewis acid loading suppressed the formation of the desired product (example 3). TiCl₄ proved a successful Lewis acid as well, although the yield of the desired product was not improved (examples 4 and 5). Interestingly, one equivalent of FeBr₃ delivered the desired product in 65% yield (example 7). A higher catalyst loading caused degradation of the product (example 6).

### B) Ratio, Lewis acid loading and temperature evaluation

### Synthetic procedure:

An oven-dried pressure vial of 10 mL equipped with a stir bar was charged with FeBr₃ under inert atmosphere. Subsequently, 2-methoxyphenyl methyl carbonate (0.5 mmol) dissolved in dichloromethane or dichloroethane (1 mL, dry) was added, followed by dropwise addition of benzoyl chloride. The vial was sealed and the resulting mixture was then stirred for 17 h at the indicated temperature, before it was quenched by the addition of water (10 mL). After extraction with EtOAc (20 mL), the organic phase was washed with a saturated solution ofNaCl (20 mL) and dried over anhydrous MgSO₄, filtered and evaporated to dryness *in vacuo.* Analysis was done as described in general procedure 2.

**Table 2.**

| Example | Type | 2-Methoxyphenyl methyl carbonate (equiv) | Benzoyl chloride (equiv) | FeBr₃ (equiv) | Temp (°C) | Solvent | Yield (%) |
|---|---|---|---|---|---|---|---|
| 8 | Reference | 1.0 | 1.0 | 1.0 | 30 | DCM | 65 |
| 9 | Reference | 1.0 | 1.0 | 1.0 | 40 | DCM | 75 |
| 10 | Reference | 1.0 | 1.0 | 1.0 | 40 | DCE | 82 |
| 11 | Reference | 1.0 | 1.2 | 1.0 | 40 | DCM | 92 |
| 12 | Reference | 1.0 | 1.5 | 1.0 | 40 | DCM | 99 |
| 13 | Reference | 1.0 | 1.5 | 0.5 | 40 | DCM | 67 |
| 14 | Reference | 1.5 | 1.0 | 1.0 | 40 | DCM | 60 |

Conclusion: A further screening of the reaction conditions was done using FeBr₃. Besides dichloromethane, also dichloroethane was successfully employed as solvent (example 10). Raising the reaction temperature to 40 °C was beneficial for the yield of 5-benzoyl-2-methoxyphenyl methyl carbonate (examples 8 & 9). Employing a slight excess of benzoyl chloride proved beneficial to achieve a good conversion (examples 10-12). Reducing the catalyst loading or using an excess of 2-methoxyphenyl methyl carbonate diminished the yield of the desired product (examples 13 & 14).

### C) Solvent screening

### Synthetic procedure:

An oven-dried pressure vial of 10 mL equipped with a stir bar was charged with FeBr₃ (1.0 equiv) under inert atmosphere. Subsequently, 2-methoxyphenyl methyl carbonate (182 mg, 1.0 mmol) dissolved in the indicated solvent (1 mL, dry) was added, followed by dropwise addition of benzoyl chloride (70 µL, 1.2 mmol). The vial was closed and the resulting mixture was stirred for 17 h at 40 °C, before it was quenched by the addition of water (10 mL). After extraction with EtOAc (20 mL), the organic phase was washed with a saturated solution of NaCl (20 mL) and dried over anhydrous MgSO₄, filtered and evaporated to dryness *in vacuo.* Analysis was done as described in general procedure 2.

**Table 3.**

| Example | Type | Solvent | Yield (%) |
|---|---|---|---|
| 15 | Reference | Dichloromethane | 94 |
| 16 | Reference | Dichloroethane | 77 |
| 17 | Reference | Chlorobenzene | 64 |
| 18 | Reference | Toluene | 47 |
| 19 | Comparative | Tetrahydrofuran | 0 |
| 20 | Reference | Neat | 48 |

Conclusion: Five different solvents were evaluated for the synthesis of the desired biscarbonate (Table 3). Besides halogenated solvents such as dichloromethane, dichloroethane and chlorobenzene (examples 15-17), also toluene (example 18) delivered the biscarbonate. However, benzoyl chloride also reacted with toluene resulting in side product formation. Therefore, chlorinated solvents seemed optimal for this transformation. Interestingly, the reaction could also be performed neat (example 20).

### D) Screening of Lewis acids

### Synthetic procedure:

An oven-dried pressure vial of 10 mL equipped with a stir bar was charged with the indicated Lewis acid (0.1, 1.0, 2.0 or 3.0 equiv) under inert atmosphere. Subsequently, 2-methoxyphenyl methyl carbonate (182 mg, 1.0 mmol) dissolved in DCM (2 mL, dry) was added, followed by dropwise addition of benzoyl chloride (70 µL, 1.2 mmol) at this temperature. The vial was sealed and the resulting mixture was then stirred for 17 h at 40 °C, before it was quenched by the addition of water (10 mL). After extraction with EtOAc (20 mL), the organic phase was washed with a saturated solution of NaCl (20 mL) and dried over anhydrous MgSO₄, filtered and evaporated to dryness *in vacuo.* Analysis was done as described in general procedure 2.

**Table 4.**

| Example | Type | Lewis acid | Loading (equiv) | Yield (%) |
|---|---|---|---|---|
| 21 | Comparative | AlCl₃ | 0.1 | 0 |
| 22 | Comparative | AlCl₃ | 1.0 | 0 |
| 23 | Reference | AlCl₃ | 2.0 | 43 |
| 24 | Reference | AlCl₃ | 3.0 | 61 |
| 25 | Comparative | Al(OTf)₃ | 0.1 | 0 |
| 26 | Comparative | Al(OTf)₃ | 1.0 | 0 |
| 27 | Comparative | ZnCl₂ | 0.1 | 0 |
| 28 | Comparative | ZnCl₂ | 1.0 | 0 |
| 29 | Reference | ZnBr₂ | 0.1 | 4 |
| 30 | Reference | ZnBr₂ | 1.0 | 8 |
| 31 | Comparative | TiCl₄ | 0.1 | 0 |
| 32 | Reference | TiCl₄ | 1.0 | 10 |
| 33 | Reference | FeBr₃ | 0.1 | 20 |
| 34 | Reference | FeBr₃ | 1.0 | 94 |
| 35 | Reference | FeCl₃ | 0.1 | 25 |
| 36 | Reference | FeCl₃ | 1.0 | 98 |
| 37 | Reference | Fe(OAc)₂ | 0.1 | 12 |
| 38 | Comparative | Fe(OAc)₂ | 1.0 | 0 |
| 39 | Reference | Sc(OTf)₃ | 0.1 | 4 |
| 40 | Reference | Sc(OTf)₃ | 1.0 | 21 |
| 41 | Comparative | Yb(OTf)₃ | 0.1 | 0 |
| 42 | Comparative | Yb(OTf)₃ | 1.0 | 0 |
| 43 | Comparative | BiCl₃ | 0.1 | 0 |
| 44 | Reference | BiCl₃ | 1.0 | 3 |
| 45 | Comparative | Bi(OTf)₃ | 0.1 | 0 |
| 46 | Reference | Bi(OTf)₃ | 1.0 | 13 |
| 47 | Reference | TeCl₄ | 0.1 | 11 |
| 48 | Reference | TeCl₄ | 1.0 | 63 |
| 49 | Reference | NbCl₅ | 0.1 | 14 |
| 50 | Reference | NbCl₅ | 1.0 | 52 |
| 51 | Comparative | SeCl₄ | 0.1 | 0 |
| 52 | Comparative | SeCl₄ | 1.0 | 0 |
| 53 | Reference | InCl₃ | 0.1 | 12 |
| 54 | Reference | InCl₃ | 1.0 | 73 |
| 55 | Reference | In(OTf)₃ | 0.1 | 30 |
| 56 | Reference | In(OTf)₃ | 1.0 | 6 |

Conclusion: Several Lewis acids were evaluated for the coupling between 2-methoxyphenyl methyl carbonate and benzoyl chloride. The results revealed that a coupling could be achieved in the presence of a metal or transition metal catalyst (defined as a MxLy compound) in stoichiometric amount. M preferably is a metal or transition metal like Al, Zn, Fe, Sc, Ti, Bi, Te, Nb or In, more preferably Al, Fe, Nb or In; L represents a suitable organic or inorganic ligand like Cl, Br, I, OTf or OAc. The Lewis acids were screened in stoichiometric and in substoichiometric amount as a possible coordination of several Lewis acids with the carbonate functional group was anticipated, which could inhibit catalysis. Moreover, depending on the solubility of the Lewis acid, a higher loading or a different ligand for the (transition) metal was required to achieve conversion of 2-methoxyphenyl methyl carbonate. AlCl₃ and FeBr₃ were selected for the evaluation of the scope based on yield, price and practical setup.

### Evaluation of the reaction scope

### General procedure 3:

An oven-dried pressure vial of 10 mL equipped with a stir bar was charged with FeBr₃ under inert atmosphere. Subsequently, the carbonate dissolved in dichloromethane (2 mL, dry) was added, followed by dropwise addition of the acyl chloride. The vial was sealed and the resulting mixture was then stirred for 17 h at 40 °C, before it was quenched by the addition of water (10 mL). After extraction with EtOAc (20 mL), the organic phase was washed with a saturated solution of NaCl (20 mL) and dried over anhydrous MgSO₄, filtered and evaporated to dryness *in vacuo.* The purification was done as described.

### COMPARATIVE EXAMPLE 57 - Acylation of methyl phenyl carbonate with benzoyl chloride

General procedure 3 was applied using methyl phenyl carbonate (51 µL, 0.5 mmol), FeBr₃ (148 mg, 0.5 mmol) and benzoyl chloride (70 µL, 0.6 mmol). The desired 4-benzoylphenyl methyl carbonate was not formed.

### COMPARATIVE EXAMPLE 58 - Acylation of 2,6-dimethylphenyl methyl carbonate with benzoyl chloride

General procedure 3 was applied using 2,6-dimethylphenyl methyl carbonate (90 mg, 0.5 mmol), FeBr₃ (148 mg, 0.5 mmol) and benzoyl chloride (70 µL, 0.6 mmol). The desired 3-benzoyl-2,6-dimethylphenyl methyl carbonate was not formed.

### REFERENCE EXAMPLE 59 - Acylation of 2-methoxyphenyl methyl carbonate with benzoyl chloride

General procedure 3 was applied using 2-methoxyphenyl methyl carbonate (91 mg, 0.5 mmol), FeBr₃ (148 mg, 0.5 mmol) and benzoyl chloride (70 µL, 0.6 mmol). The product was purified by an automated flash chromatography system using a heptane/EtOAc gradient (from 100% heptane to 20% EtOAc in 30 min, 25 mL/min). 5-Benzoyl-2-methoxyphenyl methyl carbonate was obtained in 98% (140 mg) yield.

White solid, m.p. = 106-107 °C, ¹H NMR (400 MHz, CDCl₃): δ 7.79-7.74 (m, 3H), 7.67 (d, *J* = 2.1 Hz, 1H), 7.57 (tt, *J* = 7.4, 1.6 Hz, 1H), 7.48 (t, *J* = 7.5 Hz, 2H), 7.04 (d, *J* = 8.6 Hz, 1H), 3.94 (s, 3H), 3.91 (s, 3H) ppm. ¹³C NMR (101 MHz, CDCl₃): δ 194.6 (C), 155.1 (C), 153.8 (C), 139.8 (C), 137.9 (C), 132.3 (CH), 130.4 (C), 130.4 (CH), 129.7 (CH), 128.5 (CH), 124.9 (CH), 111.7 (CH), 56.4 (CH₃), 55.8 (CH₃) ppm. HRMS (ESI) for C₁₆H₁₅O₅ [M+H]⁺ calcd. 287.0914, found 287.0919.

### REFERENCE EXAMPLE 60 - Acylation of 2-methoxyphenyl methyl carbonate with valeroyl chloride

General procedure 3 was applied using 2-methoxyphenyl methyl carbonate (91 mg, 0.5 mmol), FeBr₃ (148 mg, 0.5 mmol) and valeroyl chloride (89 µL, 0.75 mmol). The product was purified by an automated flash chromatography system using a heptane/EtOAc gradient (from 100% heptane to 50% EtOAc in 35 min, 25 mL/min). 2-Methoxy-5-pentanoylphenyl methyl carbonate was obtained in 95% (126 mg) yield.

White solid, m.p. = 71-72 °C, ¹H NMR (400 MHz, CDCl₃): δ 7.87 (dd, *J* = 8.6, 2.1 Hz, 1H), 7.75 (d, *J*= 2.1 Hz, 1H), 7.00 (d, *J* = 8.6 Hz, 1H), 3.91 (s, 6H), 2.89 (t, *J* = 7.4 Hz, 2H), 1.73-1.63 (m, 2H), 1.44-1.34 (m, 2H), 0.94 (t, *J =* 7.3 Hz, 3H) ppm. ¹³C NMR (101 MHz, CDCl₃): δ 155.2 (C), 153.8 (C), 140.0 (C), 130.4 (C), 128.1 (CH), 122.7 (CH), 111.9 (CH), 56.3 (CH₃), 55.8 (CH₃), 39.1 (CH₂), 26.7 (CH₂), 22.6 (CH₂), 14.0 (CH₃) ppm. HRMS (ESI) for C₁₄H₁₈O₅Na [M+Na]⁺ calcd. 289.1046, found 289.1052.

### REFERENCE EXAMPLE 61 - Acylation of 2-methoxyphenyl methyl carbonate with methyl succinyl chloride

General procedure 3 was applied using 2-methoxyphenyl methyl carbonate (182 mg, 1.0 mmol), FeBr₃ (296 mg, 1.0 mmol) and methyl succinyl chloride (114 µL, 1.2 mmol). The product was purified by an automated flash chromatography system using a heptane/EtOAc gradient (from 100% heptane to 60% EtOAc in 30 min, 25 mL/min). Methyl 4-[4-methoxy-3-[(methoxycarbonyl)oxy]phenyl]-4-oxobutanoate was obtained in 61% (180 mg) yield.

Colorless oil, ¹H NMR (400 MHz, CDCl₃): δ 7.91 (dd, *J* = 8.6, 2.1 Hz, 1H), 7.78 (d, *J* = 2.1 Hz, 1H), 7.02 (d, *J =* 8.6 Hz, 1H), 3.92 (s, 3H), 3.92 (s, 3H), 3.70 (s, 3H), 3.25 (t, *J* = 6.7 Hz, 2H), 2.75 (t, *J* = 6.7 Hz, 2H) ppm. ¹³C NMR (101 MHz, CDCl₃): δ 195.9 (C), 173.5 (C), 155.5 (C), 153.8 (C), 140.1 (C), 129.9 (C), 128.1 (CH), 122.7 (CH), 112.0 (CH), 56.4 (CH₃), 55.8 (CH₃), 52.0 (CH₃), 33.2 (CH₂), 28.2 (CH₂) ppm. HRMS (ESI) for C₁₄H₁₇O₇ [M+H]⁺ calcd. 297.0969, found 297.0963.

### REFERENCE EXAMPLE 62 - Acylation of 2-methoxy-4-propylphenylmethyl carbonate with benzoyl chloride

General procedure 3 was applied using 2-methoxy-4-propylphenyl methyl carbonate (224 mg, 1.0 mmol), FeBr₃ (296 mg, 1.0 mmol) and benzoyl chloride (140 µL, 1.2 mmol). The product was purified by an automated flash chromatography system using a heptane/EtOAc gradient (from 100% heptane to 50% EtOAc in 35 min, 25 mL/min). 5-Benzoyl-2-methoxy-4-propylphenyl methyl carbonate was obtained in 59% (192 mg) yield.

White oil, ¹H NMR (400 MHz, CDCl₃): δ 7.78-7.76 (m, 2H), 7.57 (t, *J* = 7.4 Hz, 1H), 7.45 (t, *J =* 7.6 Hz, 2H), 7.12 (s, 1H), 6.90 (s, 1H), 3.92 (s, 3H), 3.88 (s, 3H), 2.74-2.70 (m, 2H), 1.65-1.58 (s, 2H), 0.90 (t, *J =* 0.90 Hz, 3H) ppm. ¹³C NMR (101 MHz, CDCl₃): δ 196.8 (C), 153.9 (C), 152.8 (C), 143.2 (C), 138.4 (C), 137.1 (C), 133.0 (CH), 130.3 (C), 130.2 (CH), 128.5 (CH), 124.2 (CH), 114.4 (CH), 56.2 (CH₃), 55.7 (CH₃), 35.7 (CH₂), 25.2 (CH₂), 14.2 (CH₃) ppm. HRMS (ESI) for C₁₉H₂₁O₅ [M+H]⁺ calcd. 329.1383, found 329.1377.

### REFERENCE EXAMPLE 63 - Acylation of 2-(tert-butyl)-4-methoxyphenyl methyl carbonate with benzoyl chloride

General procedure 3 was applied using 2-(*tert*-butyl)-4-methoxyphenyl methyl carbonate (119 mg, 0.5 mmol), FeBr₃ (148 mg, 0.5 mmol) and benzoyl chloride (70 µL, 0.6 mmol). The product was purified by an automated flash chromatography system using a heptane/EtOAc gradient (from 100% heptane to 40% EtOAc in 35 min, 25 mL/min). 5-Benzoyl-2-(*tert*-butyl)-4-methoxyphenyl methyl carbonate was obtained in 80% (137 mg) yield.

White solid, ¹H NMR (400 MHz, CDCl₃): δ 7.86-7.83 (m, 2H), 7.55 (tt, *J* = 7.4, 1.2 Hz, 1H), 7.44 (t, *J* = 7.6 Hz, 2H), 7.14 (s, 1H), 6.98 (s, 1H), 3.89 (s, 3H), 3.07 (s, 3H), 1.41 (s, 9H) ppm. ¹³C NMR (101 MHz, CDCl₃): δ 194.7 (C), 155.1 (C), 154.6 (C), 145.4 (C), 143.1 (C), 137.8 (C), 133.1 (CH), 130.1 (CH), 128.4 (CH), 127.0 (C), 125.2 (CH), 110.9 (CH), 56.3 (CH₃), 56.0 (CH₃), 35.4 (C), 30.2 (CH₃) ppm. HRMS (ESI) for C₂₀H₂₂O₅K [M+K]⁺ calcd. 381.1099, found 381.1096.

### REFERENCE EXAMPLE 64 - Acylation of 3-methoxyphenyl methyl carbonate with benzoyl chloride

General procedure 3 was applied using 3-methoxyphenyl methyl carbonate (91 mg, 0.5 mmol), FeBr₃ (148 mg, 1.0 mmol) and benzoyl chloride (70 µL, 0.6 mmol). The product was purified by an automated flash chromatography system using a heptane/EtOAc gradient (from 100% heptane to 40% EtOAc in 35 min, 25 mL/min). A mixture of 2-benzoyl-5-methoxyphenyl methyl carbonate and 4-benzoyl-3-methoxyphenyl methyl carbonate was obtained in 46% (65 mg) yield in a 60:40 ratio.

Colorless oil, ¹H NMR (400 MHz, CDCl₃): δ 7.81-7.79 (m, 1.2H), 7.75-7.73 (m, 0.8H), 7.57-7.51 (m, 1.5H), 7.46-7.39 (m, 2.8H), 6.90-6.79 (m, 2H), 3.94 (s, 1.8H), 3.87 (m, 1.2H), 3.77 (s, 1.2H), 3.71 (s, 1.8H) ppm. ¹³C NMR (101 MHz, CDCl₃): δ 195.5 (C), 194.0 (C), 163.3 (C), 158.7 (C), 154.0 (C), 153.9 (C), 153.8 (C), 151.5 (C), 138.4 (C), 137.9 (C), 133.1 (CH), 133.1 (CH), 132.6 (CH), 130.8 (CH), 129.9 (CH), 129.9 (CH), 128.4 (CH), 128.4 (CH), 126.7 (C), 123.6 (C), 113.1 (CH), 111.6 (CH), 108.9 (CH), 105.2 (CH), 56.0 (CH₃), 55.9 (CH₃), 55.7 (CH₃), 55.6 (CH₃) ppm. HRMS (ESI) for C₁₆H₁₄O₅K [M+K]⁺ calcd. 325.0473, found 325.0461.

4-Benzoyl-3-hydroxyphenyl methyl carbonate was also isolated during this reaction.

Colorless Oil, ¹H NMR (400 MHz, CDCl₃): δ 12.68 (s, 1H), 7.65-7.62 (m, 2H), 7.59-7.54 (m, 1H), 7.52-7.47 (m, 3H), 6.53 (d, *J* = 2.5 Hz, 1H), 6.41 (dd, *J* = 9.0, 2.5 Hz, 1H), 3.87 (s, 3H) ppm. ¹³C NMR (101 MHz, CDCl₃): δ 200.2 (C), 166.5 (C), 166.4 (C), 138.5 (C), 135.4 (C), 131.6 (C), 129.0 (CH), 128.5 (CH), 113.3 (C), 107.5 (CH), 101.3 (CH), 55.8 (CH₃) ppm.

### REFERENCE EXAMPLE 65 - Acylation of 2,6-dimethoxyphenyl methyl carbonate with benzoyl chloride

General procedure 3 was applied using 2,6-dimethoxyphenyl methyl carbonate (119 mg, 0.5 mmol), FeBr₃ (148 mg, 1.0 mmol) and benzoyl chloride (70 µL, 0.6 mmol). The product was purified by an automated flash chromatography system using a heptane/EtOAc gradient (from 100% heptane to 50% EtOAc in 30 min, 25 mL/min). 5-Benzoyl-2-(tert-butyl)-4-methoxyphenyl methyl carbonate was obtained in 98% (240 mg) yield.

Colorless oil, ¹H NMR (400 MHz, CDCl₃): δ 7.81 (t, *J =* 7.9 Hz, 2H), 7.55 (t, *J* = 7.3 Hz, 1H), 7.44 (t, *J* = 7.5 Hz, 2H), 7.32 (d, *J* = 8.6 Hz, 1H), 6.79 (d, *J =* 8.7 Hz, 1H), 3.92 (s, 3H), 3.91 (s, 3H), 3.67 (s, 3H) ppm. ¹³C NMR (101 MHz, CDCl₃): δ 194.8 (C), 155.1 (C), 153.2 (C), 152.2 (C), 138.0 (C), 133.4 (C), 133.1 (CH), 130.0 (CH), 128.4 (CH), 128.4 (C), 126.0 (C), 107.0 (CH), 62.5 (CH₃), 56.5 (CH₃), 56.0 (CH₃) ppm. HRMS (ESI) for C₁₇H₁₇O₆ [M+H]⁺ calcd. 317.1020, found 317.1013.

### REFERENCE EXAMPLE 66 - Acylation of 2-methoxyphenyl methyl carbonate with succinic anhydride

An oven-dried 25 mL flask equipped with a stir bar was charged under inert atmosphere with AlCl₃ (1.2 g, 9.0 mmol), succinic anhydride (450 mg, 4.5 mmol) and DCM (4 mL, dry) in this order at room temperature. Subsequently, a solution of 2-methoxyphenyl methyl carbonate (547 mg, 3.0 mmol) in DCM (4 mL, dry) was added dropwise at 0 °C. The resulting mixture was slowly heated to room temperature overnight while stirring. The reaction was quenched by pouring it on ice mixed with aqueous HCl (1 M, 20 mL). After extraction with EtOAc (20 mL), the organic phase was dried over anhydrous MgSO₄, filtered and evaporated to dryness *in vacuo.* The product was purified by an automated flash chromatography system using a heptane/EtOAc gradient (from 100% heptane to 100% EtOAc in 40 min, 25 mL/min). 4-(4-Methoxy-3-((methoxycarbonyl)oxy)phenyl)-4-oxobutanoic acid was obtained in 80% (674 mg) yield.

White solid, m.p. = 115-116 °C, ¹H NMR (400 MHz, CDCl₃): δ 7.91 (dd, *J* = 8.6, 2.1 Hz, 1H), 7.78 (d,*J =* 2.1 Hz, 1H), 7.02 (d, *J* = 8.7 Hz, 1H), 3.92 (s, 3H), 3.92 (s, 3H), 3.25 (t, *J* = 6.6 Hz, 2H), 2.79 (t, *J* = 6.6 Hz, 2H) ppm. ¹³C NMR (101 MHz, CDCl₃): δ 195.7 (C), 178.0 (C), 155.6 (C), 153.8 (C), 140.1 (C), 129.8 (C), 128.1 (CH), 122.8 (CH), 112.0 (CH), 56.4 (CH₃), 55.9 (CH₃), 33.0 (CH₂), 28.1 (CH₂) ppm. HRMS (ESI) for C₁₃H₁₄O₇Na [M+Na]⁺ calcd. 305.0632, found 305.0628.

### COMPARATIVE EXAMPLE 67 - Acylation of diphenyl carbonate with benzoyl chloride

General procedure 3 was applied using diphenyl carbonate (90 mg, 0.5 mmol), FeBr₃ (148 mg, 0.5 mmol) and benzoyl chloride (70 µL, 0.6 mmol). The desired 3-benzoyl-2,6-dimethylphenyl methyl carbonate was not formed.

### REFERENCE EXAMPLE 68 - Acylation of guaiacol carbonate with benzoyl chloride

General procedure 3 was applied using guaiacol carbonate (137 mg, 0.5 mmol), FeBr₃ (296 mg, 1.0 mmol) and benzoyl chloride (174 µL, 1.50 mmol). The product was purified by an automated flash chromatography system using a heptane/EtOAc gradient (from 100% heptane to 25% EtOAc in 30 min, 25 mL/min). Bis(5-benzoyl-2-methoxylphenyl) carbonate was obtained in 99% (240 mg) yield.

White solid, m.p. = 153-154 °C, ¹H NMR (400 MHz, CDCl₃): δ 7.80-7.76 (m, 8H), 7.58 (tt, *J* = 7.4, 1.3 Hz, 2H), 7.49 (t, *J* = 7.5 Hz, 4H), 7.08-7.06 (m, 2H), 3.97 (s, 6H) ppm. ¹³C NMR (101 MHz, CDCl₃): δ 194.5 (C), 155.0 (C), 150.9 (C), 139.8 (C), 137.9 (C), 132.3 (CH), 130.6 (CH), 130.4 (C), 129.7 (CH), 128.9 (CH), 124.7 (CH), 112.0 (CH), 56.5 (CH₃) ppm. HRMS (ESI) for C₂₉H₂₂O₇Na [M+Na]⁺ calcd. 505.1258, found 505.1258.

### REFERENCE EXAMPLE 69 - Acylation of guaiacol carbonate with succinic anhydride

An oven-dried 25 mL two-necked flask equipped with a stir bar was charged under inert atmosphere with AlCl₃ (2.4 g, 18.0 mmol), succinic anhydride (901 mg, 9.0 mmol) and DCM (8 mL, dry) in this order at room temperature. Subsequently, a solution of guaiacol carbonate (823 mg, 3.0 mmol) in DCM (2 mL, dry) was added dropwise at 0 °C. The resulting mixture was slowly heated to room temperature overnight while stirring. The reaction was quenched by pouring it on ice mixed with aqueous HCl (1M, 20 mL). The formed precipitate was filtered, washed with EtOAc (20 mL) and dried *in vacuo.* 4,4'-[Carbonylbis[oxy(4-methoxy-3,1-phenylene)]]bis(4-oxobutanoic acid) was obtained in 77% (1.095 g) yield.

White solid, m.p. = 215-216 °C, ¹H NMR (400 MHz, DMSO-d₆): δ 12.12 (br s, 2H), 8.01-7.99 (m, 2H), 7.93 (d, *J =* 2.1 Hz, 2H), 7.34 (d, *J* = 8.7 Hz, 2H), 3.98 (s, 6H), 3.23 (t, *J* = 6.2 Hz, 4H), 2.59 (t, *J* = 6.3 Hz, 4H) ppm. ¹³C NMR (101 MHz, DMSO-d₆): δ 196.3 (C), 173.8 (C), 154.7 (C), 150.4 (C), 139.2 (C), 129.5 (C), 128.4 (CH), 121.9 (CH), 112.9 (CH), 56.6 (CH₃), 32.8 (CH₂), 27.9 (CH₂) ppm. HRMS (ESI) for C₂₃H₂₂O₁₁Na [M+Na]⁺ calcd. 497.1054, found 497.1067.

### REFERENCE EXAMPLE 70 - Acylation of bis(2-methoxy-4-propylphenyl) carbonate with benzoyl chloride

General procedure 3 was applied using bis(2-methoxy-4-propylphenyl) carbonate (179 mg, 0.5 mmol), FeBr₃ (296 mg, 1.0 mmol) and benzoyl chloride (174 µL, 1.50 mmol). The product was purified by an automated flash chromatography system using a heptane/EtOAc gradient (from 100% heptane to 25% EtOAc in 25 min, 25 mL/min). Bis(5-benzoyl-2-methoxy-4-propylphenyl) carbonate was obtained in 92% (261 mg) yield.

White solid, m.p. = 146-147°C, ¹H NMR (400 MHz, CDCl₃): δ 7.79-7.74 (m, 4H), 7.57 (tt, *J* = 7.7, 1.1 Hz, 2H), 7.57 (t, *J* = 7.6 Hz, 4H), 7.20 (s, 2H), 6.90 (s, 2H), 3.90 (s, 6H), 2.86-2.51 (m, 4H), 1.73-1.50 (m, 4H), 0.90 (t, *J* = 7.3 Hz, 6H) ppm. ¹³C NMR (101 MHz, CDCl₃): δ 194.7 (C), 152.7 (C), 151.2 (C), 143.4 (C), 138.4 (C), 137.1 (C), 133.0 (CH), 130.3 (C), 130.2 (CH), 128.6 (CH), 124.1 (CH), 114.6 (CH), 56.3 (CH₃), 35.7 (CH₂), 25.2 (CH₂), 14.2 (CH₃) ppm. HRMS (ESI) for C₃₅H₃₅O₇ [M+H]⁺ calcd. 567.2377, found 567.2382.

### REFERENCE EXAMPLE 71 - Biscarbonate formation from 2-methoxyphenyl methyl carbonate

General procedure 3 was applied using 2-methoxyphenyl methyl carbonate (182 mg, 1.0 mmol), AlCl₃ (267 mg, 2.0 mmol) and hexanedioyl dichloride (73 µL, 0.50 mmol). The product was purified by an automated flash chromatography system using a heptane/EtOAc gradient (from 100% heptane to 100% EtOAc in 40 min, 25 mL/min). (1,6-Dioxohexane-1,6-diyl)bis(6-methoxy-3,1-phenylene) dimethyl biscarbonate was obtained in 38% (240 mg) yield.

Yellow solid, m.p. = 165-166 °C, ¹H NMR (400 MHz, CDCl₃): δ 7.88 (dd, *J* = 8.6, 2.1 Hz, 2H), 7.76 (d, *J* = 2.1 Hz, 2H), 7.01 (d, *J* = 8.6 Hz, 2H), 3.92 (s, 6H), 3.91 (s, 6H), 2.95-2.91 (m, 4H), 1.84-1.78 (m, 4H) ppm. ¹³C NMR (101 MHz, CDCl₃): δ 199.8 (C), 155.3 (C), 153.8 (C), 140.1 (C), 130.3 (C), 128.1 (CH), 122.7 (CH), 112.0 (CH), 56.3 (CH₃), 55.8 (CH₃), 38.2 (CH₂), 24.1 (CH₂) ppm. HRMS (ESI) for C₂₄H₂₆O₁₀Na [M+Na]⁺ calcd. 497.1418, found 497.1402.

### REFERENCE EXAMPLE 72 - Biscarbonate formation from 4-(4-methoxy-3-((methoxycarbonyl)oxy)phenyl)-4-oxobutanoic acid with neopentyl glycol

An oven-dried microwave tube of 25 mL was charged with 4-(4-methoxy-3-((methoxycarbonyl)oxy)phenyl)-4-oxobutanoic acid (141 mg, 0.5 mmol), neopentyl glycol (26 mg, 0.25 mmol) and p-toluenesulfonic acid monohydrate (5 mg, 0.025 mmol) under argon atmosphere. Toluene (2 mL, dry) was added, the vial was sealed and the mixture was heated overnight at 80 °C in an oil bath. Subsequently, the product was cooled to room temperature and the mixture was quenched by the addition of water (15 mL). After extraction with EtOAc (20 mL), the organic phase was dried over anhydrous MgSO₄, filtered and evaporated to dryness *in vacuo.* The product was purified by an automated flash chromatography system using a heptane/EtOAc gradient (from 100% heptane to 100% EtOAc in 40 min, 25 mL/min). 2,2-Dimethylpropane-1,3-diyl bis(4-(4-methoxy-3-((methoxycarbonyl)oxy)phenyl)-4-oxobutanoate) was obtained in 75% (119 mg) yield.

White sticky oil, ¹H NMR (400 MHz, CDCl₃): δ 7.90 (dd, *J =* 8.6, 2.1 Hz, 2H), 7.78 (d, *J* = 2.1 Hz, 2H), 7.00 (d, *J* = 8.6 Hz, 2H), 3.91 (s, 8H), 3.91 (s, 8H), 3.24 (t, *J* = 6.6 Hz, 4H), 2.76 (t, *J* = 6.6 Hz, 4H), 0.95 (s, 6H) ppm. ¹³C NMR (101 MHz, CDCl₃): δ 195.8 (C), 172.8 (C), 155.5 (C), 153.8 (C), 140.1 (C), 129.9 (C), 128.1 (CH), 122.6 (CH), 112.0 (CH), 69.4 (CH₂), 56.3 (CH₃), 55.8 (CH₃), 34.9 (C), 33.1 (CH₂), 28.3 (CH₂), 21.9 (CH₃) ppm. HRMS (ESI) for C₃₁H₃₇O₁₄ [M+H]⁺ calcd. 633.2178, found 633.2172.

### INVENTIVE EXAMPLE 73 - Oligomerization between guaiacol carbonate and hexanedioyl dichloride

An oven-dried pressure vial of 10 mL equipped with a stir bar was charged with AlCl₃ (400 mg, 3.0 mmol) under inert atmosphere. Subsequently, the guaiacol carbonate (274 mg, 1.0 mmol) dissolved in dichloromethane (2 mL, dry) was added, followed by dropwise addition of hexanedioyl dichloride (174 µL, 1.20 mmol) at 0 °C. After 10 minutes, the resulting mixture was stirred for 3 h at 40 °C. The mixture was quenched by adding this to MeOH (15 mL). The resulting solid was filtered and dried *in vacuo.* The formation of oligomers was proven *via* nano-mass electrospray analysis (see Figure 1). The repeating unit (n) had a m/z value of 384.1, with the sodium adduct of the analytes detected from 823.2 (n = 2) until 2360.7 (n = 6). Interestingly, these analytes contain a methyl ester endgroup instead of a acyl chloride, due to reaction of the acyl chloride with MeOH upon workup. In addition, sodium adducts of the analytes containing two methyl ester end groups were also visible in the mass spectrum from 965.3 (n = 3) until 2502.9 (n = 7).

Conclusion: Several unsymmetrical methyl carbonates were evaluated as a coupling partner for benzoyl chloride to obtain acylated carbonates. A substituent, with preferably a +M effect (e.g. a methoxy moiety), was required at the aromatic moiety of the methyl carbonate as no coupling was observed for methyl phenyl carbonate (example 57) and 2,6-dimethylphenyl methyl carbonate (example 58). Interestingly, it was found that the substituent overrules the para-directing effect of the carbonate group, so a *meta-linkage* with respect to the carbonate group is obtained (example 59). Furthermore, it was found that a combination of two substituents, which each have a +M effect and/or a +I effect, also deliver the envisioned biscarbonates (a *tert*-butyl and methoxy moiety in reference example 63 or two methoxy moieties in example 65). As shown in examples 62 and 63 the methoxy moiety does not need to be in the *ortho-position* relative to the carbonate. In that case, the directing effect of the substituent caused other linkages between the aromatic moieties. The reaction could also be extended to aliphatic acyl chlorides as illustrated for valeroyl chloride (example 60) and methyl succinyl chloride (example 61). In addition, succinic anhydride also successfully underwent Friedel Crafts acylation of the model substrate (example 66). Symmetrical aryl carbonates were subsequently evaluated (examples 67-70) and the results were in line with the unsymmetrical methyl derivatives. Pleasingly a biscarbonate was directly obtained when diacyl chlorides were coupled with 2-methoxyphenyl methyl carbonate (example 71) or *via* anhydride coupling followed by esterification with a diol (example 72). Oligomer formation was illustrated *via* nano-mass electrospray analysis of a coupling between guaiacol carbonate and hexanedioyl dichloride (inventive example 73).

## Claims

1. A process for preparing a polycarbonate using electrophilic aromatic substitution, comprising a reaction of a compound with a structure of formula (I) 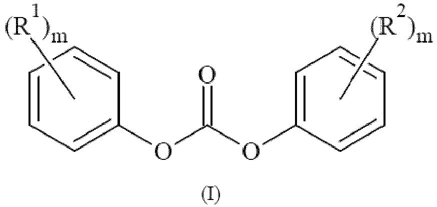
and a compound with a structure of formula (IIa) or (IIb) 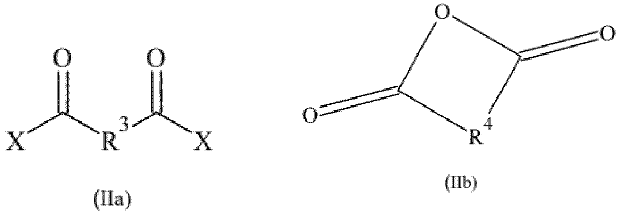
in the presence of a Lewis acid catalyst, preferably a metal- or transition metal-based Lewis acid catalyst, wherein the reaction using compound (IIa) yields a polycarbonate comprising a repeating unit with a structure of formula (IIIa) 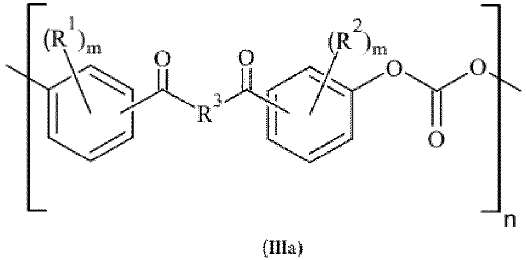 wherein the repeating unit with the structure of formula (IIIa) comprises two aromatic rings, a carbonate group -OC(=O)O- and a linking group -C(=O)R³C(=O)-, wherein one of the two aromatic rings is substituted with the carbonate group, the two aromatic rings are linked *via* the linking group and the linking group in each repeating unit independently is either in *ortho-, meta- or para-position* with respect to the carbonate group,
wherein the reaction using a compound (IIb) yields an intermediate product comprising a terminal carboxylic acid, the intermediate product upon following esterification with a diol with a structure of formula (IV) 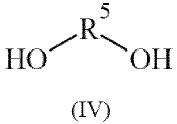
yielding a polycarbonate comprising a repeating unit with a structure of formula (IIIb) 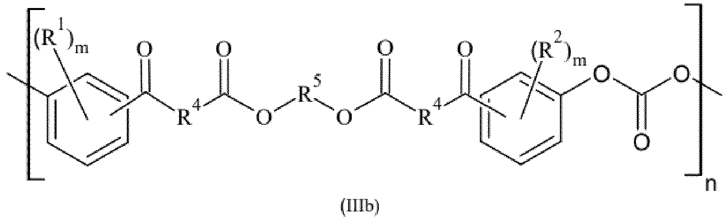 wherein the repeating unit with the structure of formula (IIIb) comprises two aromatic rings, a carbonate group -OC(=O)O- and a linking group -C(=O)R⁴C(=O)OR⁵OC(=O)R⁴C(=O)-, wherein one of the two aromatic rings is substituted with the carbonate group, the two aromatic rings are linked *via* the linking group and the linking group in each repeating unit independently is either in *ortho-, meta- or para-position* with respect to the carbonate group,
and wherein
- each m independently is 1 to 4, preferably 1 to 3
- each R¹ and R² independently represents an R¹ substituent and an R² substituent, respectively, being capable of activating the aromatic ring which it substitutes by a mesomeric effect and/or an inductive effect, with the proviso that at least one R¹ substituent and additionally at least one R² substituent exhibits a +M effect,
- R³ represents
∘ an alkyl or alkylene group having 1 to 20 carbon atoms, wherein this alkyl or alkylene group is optionally interrupted by at least one hetero atom, carbonyl group with ester or ketone functionality, a thioester group or a combination of these,
∘ an optionally substituted cycloalkyl or cycloalkylene group having 6 to 12 carbon atoms in total,
∘ an optionally substituted phenyl group having 6 to 12 carbon atoms in total,
- each X independently represents a halogen atom,
- R⁴ represents an alkyl or alkylene group,
- R⁵ represents an alkyl or alkylene group, and
- n is the number of repeating units and is 6 to 60.

2. The process according to claim 1, wherein at least one R¹ substituent and/or at least one R² substituent represents a substituent being capable of directing an electrophile to a position at the aromatic ring which is in *ortho-* or *para*-position, preferably *para*-position, with respect to the R¹ substituent and/or R² substituent, respectively.

3. The process according to one of claims 1 to 2, wherein at least one R¹ substituent and/or at least one R² substituent is in *ortho-position* with respect to the carbonate group substituting the same aromatic ring.

4. The process according to one of claims 1 to 3, wherein each R¹ substituent and each R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert-butyl, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, *n-*butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

5. The process according to one of claims 1 to 4, wherein R³ represents an alkyl or alkylene group not being interrupted and having 1 to 8 carbon atoms.

6. The process according to one of claims 1 to 5, wherein either a halogenated solvent and/or an aromatic solvent or no solvent at all, preferably a halogenated solvent, is used.

7. The process according to one of claims 1 to 6, wherein the Lewis acid catalyst, preferably the metal- or transition metal-based Lewis acid catalyst, comprises a metal or transition metal selected from Al, Zn, Fe, Sc, Ti, Bi, Te, Nb or In, preferably Al, Fe or In.

8. The process according to claim 7, wherein the Lewis acid catalyst, preferably the metal- or transition metal-based Lewis acid catalyst, is selected from AlCl₃, ZnBr₂, FeBr₃, FeCl₃, Fe(OAc)₂, Sc(OTf)₃, TiCl₄, BiCl₃, Bi(OTf)₃, TeCl₄, NbCl₅, InCl₃ or In(OTf)₃, preferably AlCl₃, FeBr₃, FeCl₃ or InCl₃.

9. The process according to one of claims 1 to 8, wherein the Lewis acid catalyst is added in an amount of 0.1 to 6.0 equivalents, preferably 1.0 to 6.0 equivalents, with respect to the compound of formula (I).

10. The process according to one of claims 1 to 9, wherein the compound of formula (IIa) or (IIb) is added in an amount of 0.5 to 3.0 equivalents with respect to the compound of formula (I).

11. A polycarbonate comprising a repeating unit with a structure of formula (IIIa) 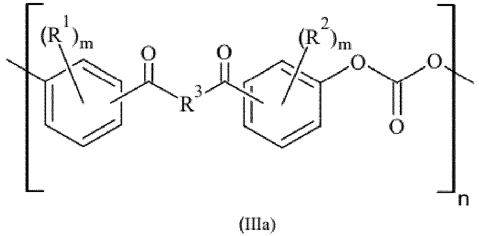
wherein the repeating unit with the structure of formula (III) comprises two aromatic rings, a carbonate group -OC(=O)O- and a linking group -C(=O)R³C(=O)-, wherein one of the two aromatic rings is substituted with the carbonate group, the two aromatic rings are linked *via* the linking group and the linking group in each repeating unit independently is either in *ortho-, meta- or para-position* with respect to the carbonate group,
or (IIIb) 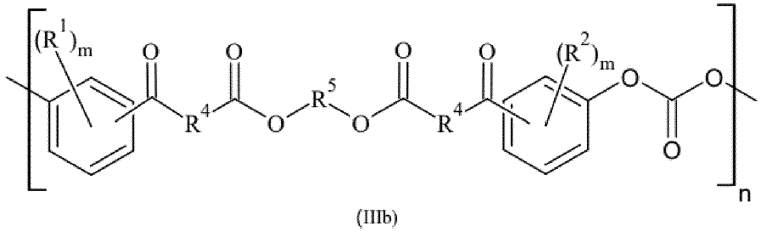
wherein the repeating unit with the structure of formula (IIIb) comprises two aromatic rings, a carbonate group -OC(=O)O- and a linking group -C(=O)R⁴C(=O)OR⁵OC(=O)R⁴C(=O)-, wherein one of the two aromatic rings is substituted with the carbonate group, the two aromatic rings are linked *via* the linking group and the linking group in each repeating unit independently is either in *ortho-, meta- or para-*position with respect to the carbonate group,
and wherein
- each m independently is 1 to 4, preferably 1 to 3,
- each R¹ and R² independently represents an R¹ substituent and an R² substituent, respectively, being capable of activating the aromatic ring which it substitutes by a mesomeric effect and/or an inductive effect, with the proviso that at least one R¹ substituent and additionally at least one R² substituent exhibits a +M effect,
- R³ represents
∘ an alkyl or alkylene group having 1 to 20 carbon atoms, wherein this alkyl or alkylene group is optionally interrupted by at least one hetero atom, carbonyl group with ester or ketone functionality, a thioester group or a combination of these,an optionally substituted cycloalkyl or cycloalkylene group having 6 to 12 carbon atoms in total,
∘ an optionally substituted phenyl group having 6 to 12 carbon atoms in total,
- R⁴ represents an alkyl or alkylene group,
- R⁵ represents an alkyl or alkylene group, and
- n is the number of repeating units and is 6 to 60.

12. The polycarbonate according to claim 11, wherein at least one R¹ substituent and/or at least one R² substituent is in *ortho*-position with respect to the carbonate group substituting the same aromatic ring.

13. The polycarbonate according to one of claims 11 to 12, wherein the linking group in each repeating unit independently is in *meta-position,* with respect to the carbonate group.

14. The polycarbonate according to one of claims 11 to 13, each R¹ substituent and each R² substituent independently represents an alkyl group or an alkoxy group, preferably an alkyl or alkoxy group having 1 to 6 carbon atoms, more preferably methyl, ethyl, *n*-propyl, isopropyl, *n*-butyl, *sec*-butyl, *tert-butyl, n*-pentyl, 1-methylbutyl, 2-methylbutyl, 3-methylbutyl, neopentyl, 1-ethylpropyl, cyclohexyl, cyclopentyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl, methoxy, ethoxy, *n*-propoxy, isopropoxy, n-butoxy, *sec*-butoxy, *tert*-butoxy, *n*-pentoxy, 1-methylbutoxy, 2-methylbutoxy, 3-methylbutoxy, neopentoxy, 1-ethylpropoxy, cyclohexoxy, cyclopentoxy, *n*-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy.

15. A polycarbonate according to one of claims 11 to 14, wherein R³ represents an alkyl or alkylene group not being interrupted and having 1 to 8 carbon atoms.

## Patentansprüche

1. Verfahren zur Herstellung eines Polycarbonats mittels elektrophiler aromatischer Substitution, umfassend eine Umsetzung einer Verbindung mit einer Struktur der Formel (I) 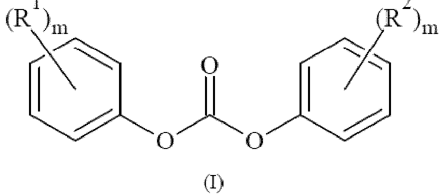
und einer Verbindung mit einer Struktur der Formel (IIa) oder (IIb) 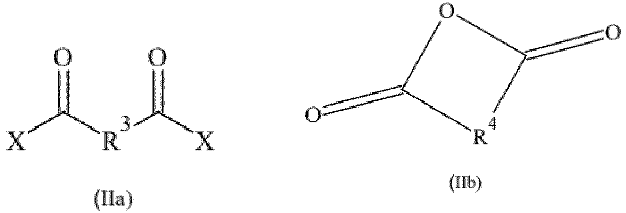
in Gegenwart eines Lewis-Säure-Katalysators, vorzugsweise eines Lewis-Säure-Katalysators auf Metall- oder Übergangsmetallbasis, wobei die Reaktion unter Verwendung von Verbindung (IIa) ein Polycarbonat ergibt, das eine Wiederholungseinheit mit einer Struktur der Formel (IIIa) umfasst 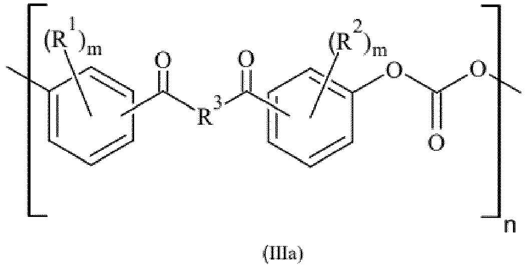
wobei die Wiederholungseinheit mit der Struktur der Formel (IIIa) zwei aromatische Ringe, eine Carbonatgruppe -OC(=O)O- und eine Verknüpfungsgruppe -C(=O)R³C(=O)-umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht, wobei die Reaktion unter Verwendung einer Verbindung (IIb) ein Zwischenprodukt ergibt, das eine endständige Carbonsäure umfasst, wobei das Zwischenprodukt nach Veresterung mit einem Diol mit einer Struktur der Formel (IV) 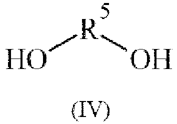
ein Polycarbonat ergibt, das eine Wiederholungseinheit mit einer Struktur der Formel (IIIb) umfasst 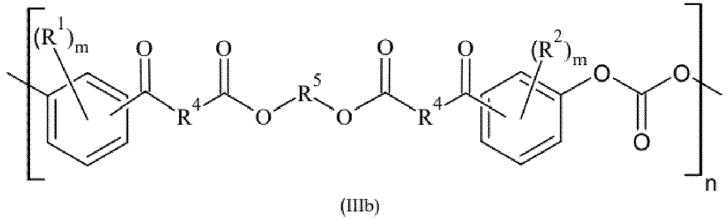
wobei die Wiederholungseinheit mit der Struktur der Formel (IIIb) zwei aromatische Ringe, eine Carbonatgruppe -OC(=O)O- und eine Verknüpfungsgruppe - C(=O)R⁴C(=O)OR⁵OC(=O)R⁴C(=O)- umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
und wobei
- m jeweils unabhängig 1 bis 4, vorzugsweise 1 bis 3, ist,
- R¹ und R² jeweils unabhängig für einen R¹-Substituenten bzw. einen R²-Substituenten stehen, der in der Lage ist, den aromatischen Ring, den er substituiert, durch einen mesomeren Effekt und/oder einen induktiven Effekt zu aktivieren, mit der Maßgabe, dass mindestens ein R¹-Substituent und zusätzlich mindestens ein R²-Substituent einen +M-Effekt zeigen,
- R³ für Folgendes steht:
∘ eine Alkyl- oder Alkylengruppe mit 1 bis 20 Kohlenstoffatomen, wobei diese Alkyl- oder Alkylengruppe gegebenenfalls durch mindestens ein Heteroatom, eine Carbonylgruppe mit Ester- oder Ketonfunktionalität, eine Thioestergruppe oder eine Kombination davon unterbrochen ist,
∘ eine gegebenenfalls substituierte Cycloalkyl- oder Cycloalkylengruppe mit insgesamt 6 bis 12 Kohlenstoffatomen,
∘ eine gegebenenfalls substituierte Phenylgruppe mit insgesamt 6 bis 12 Kohlenstoffatomen,
- X jeweils unabhängig für ein Halogenatom steht,
- R⁴ für eine Alkyl- oder Alkylengruppe steht,
- R⁵ für eine Alkyl- oder Alkylengruppe steht und
- n die Zahl der Wiederholungseinheiten ist und 6 bis 60 beträgt.

2. Verfahren nach Anspruch 1, wobei mindestens ein R¹-Substituent und/oder mindestens ein R²-Substituent für einen Substituenten stehen, der in der Lage ist, ein Elektrophil in eine Position am aromatischen Ring zu dirigieren, die in ortho- oder para-Position, vorzugsweise para-Position, zu dem R¹-Substituenten bzw. R²-Substituenten steht.

3. Verfahren nach einem der Ansprüche 1 bis 2, wobei mindestens ein R¹-Substituent und/oder mindestens ein R²-Substituent in ortho-Position zu der Carbonatgruppe, die denselben aromatischen Ring substituiert, steht.

4. Verfahren nach einem der Ansprüche 1 bis 3, wobei jeder R¹-Substituent und jeder R²-Substituent unabhängig für eine Alkylgruppe oder eine Alkoxygruppe, vorzugsweise eine Alkyl- oder Alkoxygruppe mit 1 bis 6 Kohlenstoffatomen, weiter bevorzugt Methyl, Ethyl, n-Propyl, Isopropyl, n-Butyl, sec.-Butyl, tert.-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-propoxy, Isopropoxy, n-Butoxy, sec.-Butoxy, tert.-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, steht.

5. Verfahren nach einem der Ansprüche 1 bis 4, wobei R³ für eine nicht unterbrochene Alkyl- oder Alkylengruppe mit 1 bis 8 Kohlenstoffatomen steht.

6. Verfahren nach einem der Ansprüche 1 bis 5, wobei entweder ein halogeniertes Lösungsmittel und/oder ein aromatisches Lösungsmittel oder gar kein Lösungsmittel, vorzugsweise ein halogeniertes Lösungsmittel, verwendet wird.

7. Verfahren nach einem der Ansprüche 1 bis 6, wobei der Lewis-Säure-Katalysator, vorzugsweise der Lewis-Säure-Katalysator auf Metall- oder Übergangsmetallbasis, ein Metall oder Übergangsmetall umfasst, das aus Al, Zn, Fe, Sc, Ti, Bi, Te, Nb oder In, vorzugsweise Al, Fe oder In, ausgewählt ist.

8. Verfahren nach Anspruch 7, wobei der Lewis-Säure-Katalysator, vorzugsweise der Lewis-Säure-Katalysator auf Metall- oder Übergangsmetallbasis, aus AlCl₃, ZnBr₂, FeBr₃, FeCl₃, Fe(OAc)₂, Sc(OTf)₃, TiCl₄, BiCl₃, Bi(OTf)₃, TeCl₄, NbCl₅, InCl₃ oder In(OTf)₃, vorzugsweise AlCl₃, FeBr₃, FeCl₃ oder InCl₃, ausgewählt ist.

9. Verfahren nach einem der Ansprüche 1 bis 8, wobei der Lewis-Säure-Katalysator in einer Menge von 0,1 bis 6,0 Äquivalenten, vorzugsweise 1,0 bis 6,0 Äquivalenten, bezogen auf die Verbindung der Formel (I), zugegeben wird.

10. Verfahren nach einem der Ansprüche 1 bis 9, wobei die Verbindung der Formel (IIa) oder (IIb) in einer Menge von 0,5 bis 3,0 Äquivalenten, bezogen auf die Verbindung der Formel (I), zugegeben wird.

11. Polycarbonat, umfassend eine Wiederholungseinheit mit einer Struktur der Formel (IIIa) 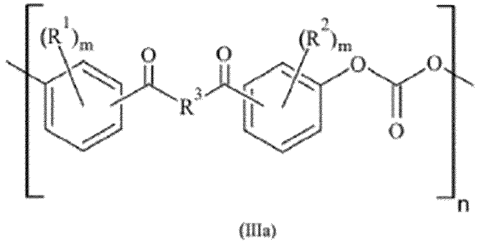
wobei die Wiederholungseinheit mit der Struktur der Formel (III) zwei aromatische Ringe, eine Carbonatgruppe -OC(=O)O- und eine Verknüpfungsgruppe -C(=O)R³C(=O)-umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
oder (IIIb) 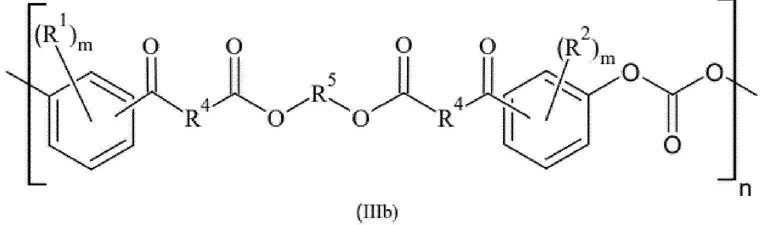
wobei die Wiederholungseinheit mit der Struktur der Formel (IIIb) zwei aromatische Ringe, eine Carbonatgruppe -OC(=O)O- und eine Verknüpfungsgruppe - C(=O)R⁴C(=O)OR⁵OC(=O)R⁴C(=O)- umfasst, wobei einer der beiden aromatischen Ringe durch die Carbonatgruppe substituiert ist, die beiden aromatischen Ringe über die Verknüpfungsgruppe verknüpft sind und die Verknüpfungsgruppe in jeder Wiederholungseinheit unabhängig entweder in ortho-, meta- oder para-Position zur Carbonatgruppe steht,
und wobei
- m jeweils unabhängig 1 bis 4, vorzugsweise 1 bis 3, ist,
- R¹ und R² jeweils unabhängig für einen R¹-Substituenten bzw. einen R²-Substituenten stehen, der in der Lage ist, den aromatischen Ring, den er substituiert, durch einen mesomeren Effekt und/oder einen induktiven Effekt zu aktivieren, mit der Maßgabe, dass mindestens ein R¹-Substituent und zusätzlich mindestens ein R²-Substituent einen +M-Effekt zeigen,
- R³ für Folgendes steht:
∘ eine Alkyl- oder Alkylengruppe mit 1 bis 20 Kohlenstoffatomen, wobei diese Alkyl- oder Alkylengruppe gegebenenfalls durch mindestens ein Heteroatom, eine Carbonylgruppe mit Ester- oder Ketonfunktionalität, eine Thioestergruppe oder eine Kombination davon unterbrochen ist, eine gegebenenfalls substituierte Cycloalkyl- oder Cycloalkylengruppe mit insgesamt 6 bis 12 Kohlenstoffatomen,
∘ eine gegebenenfalls substituierte Phenylgruppe mit insgesamt 6 bis 12 Kohlenstoffatomen,
- R⁴ für eine Alkyl- oder Alkylengruppe steht,
- R⁵ für eine Alkyl- oder Alkylengruppe steht und
- n die Zahl der Wiederholungseinheiten ist und 6 bis 60 beträgt.

12. Polycarbonat nach Anspruch 11, wobei mindestens ein R¹-Substituent und/oder mindestens ein R²-Substituent in ortho-Position zu der Carbonatgruppe, die denselben aromatischen Ring substituiert, steht.

13. Polycarbonat nach einem der Ansprüche 11 bis 12, wobei die Verknüpfungsgruppe in jeder Wiederholungseinheit unabhängig in meta-Position zu der Carbonatgruppe steht.

14. Polycarbonat nach einem der Ansprüche 11 bis 13, wobei jeder R¹-Substituent und jeder R²-Substituent unabhängig für eine Alkylgruppe oder eine Alkoxygruppe, vorzugsweise eine Alkyl- oder Alkoxygruppe mit 1 bis 6 Kohlenstoffatomen, weiter bevorzugt Methyl, Ethyl, n-Propyl, Isopropyl, n-Butyl, sec.-Butyl, tert.-Butyl, n-Pentyl, 1-Methylbutyl, 2-Methylbutyl, 3-Methylbutyl, Neopentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, Methoxy, Ethoxy, n-propoxy, Isopropoxy, n-Butoxy, sec.-Butoxy, tert.-Butoxy, n-Pentoxy, 1-Methylbutoxy, 2-Methylbutoxy, 3-Methylbutoxy, Neopentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy, steht.

15. Polycarbonat nach einem der Ansprüche 11 bis 14, wobei R³ für eine nicht unterbrochene Alkyl- oder Alkylengruppe mit 1 bis 8 Kohlenstoffatomen steht.

## Revendications

1. Procédé de préparation d'un polycarbonate utilisant une substitution aromatique électrophile, comprenant une réaction d'un composé ayant une structure de formule (I) 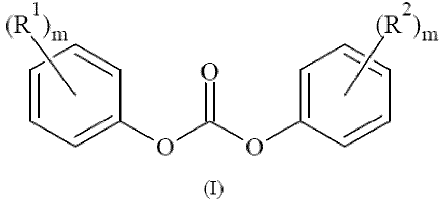
et un composé ayant une structure de formule (IIa) ou (IIb) 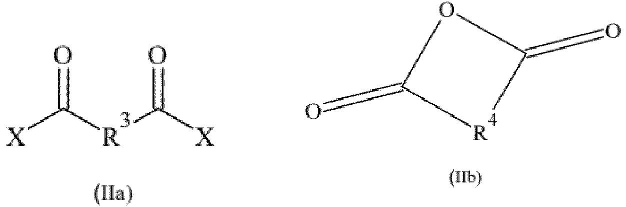
en présence d'un catalyseur de type acide de Lewis, de préférence un catalyseur de type acide de Lewis à base de métal ou de métal de transition, la réaction utilisant le composé (IIa) donnant un polycarbonate comprenant un motif répétitif ayant une structure de formule (IIIa) 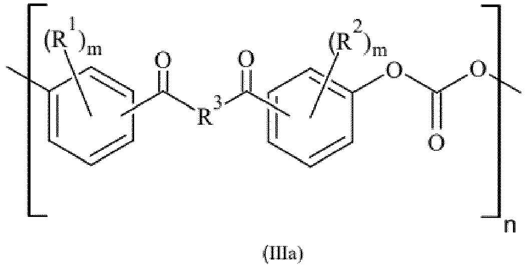
dans laquelle le motif répétitif ayant une structure de formule (IIIa) comprend deux cycles aromatiques, un groupe carbonate -OC(=O)O- et un groupe de liaison - C(=O)R³C(=O)-, un des deux cycles aromatiques étant substitué par le groupe carbonate, les deux cycles aromatiques étant liés via le groupe de liaison et le groupe de liaison dans chaque motif répétitif est indépendamment soit en position ortho, méta ou para par rapport au groupe carbonate,
dans lequel la réaction utilisant un composé (IIb) donne un produit intermédiaire comprenant un acide carboxylique terminal, le produit intermédiaire après estérification ultérieure avec un diol ayant une structure de formule (IV) 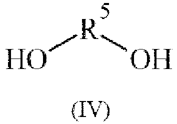
donnant un polycarbonate comprenant un motif répétitif ayant une structure de formule (IIIb) 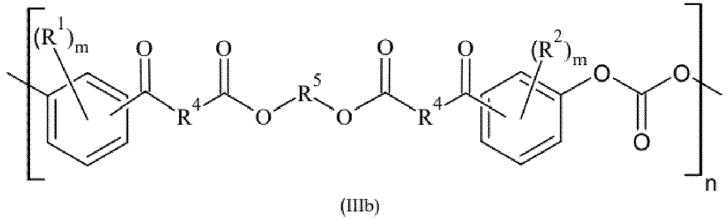
dans laquelle le motif répétitif ayant une structure de formule (IIIb) comprend deux cycles aromatiques, un groupe carbonate -OC(=O)O- et un groupe de liaison-C(=O)R⁴C(=O)OR⁵OC(=O)R⁴C(=O)-, un des deux cycles aromatiques étant substitué par le groupe carbonate, les deux cycles aromatiques étant liés via le groupe de liaison et le groupe de liaison dans chaque motif répétitif est indépendamment soit en position ortho, méta ou para par rapport au groupe carbonate,
et dans laquelle
- chaque m, indépendamment est 1 à 4, de préférence 1 à 3
- chaque R¹ et R² représente indépendamment respectivement un substituant R¹ et un substituant R², qui est capable d'activer le cycle aromatique qu'il substitue par un effet mésomère et/ou un effet inductif, sous réserve qu'au moins un substituant R¹ et en outre au moins un substituant R² présente un effet +M,
- R³ représente
∘ un groupe alkyle ou alkylène ayant 1 à 20 atomes de carbone, dans lequel ce groupe alkyle ou alkylène est éventuellement interrompu par au moins un hétéroatome, un groupe carbonyle comportant une fonctionnalité ester ou cétone, un groupe thioester ou une combinaison de ceux-ci,
∘ un groupe cycloalkyle ou cycloalkylène éventuellement substitué ayant 6 à 12 atomes de carbone au total,
∘ un groupe phényle éventuellement substitué ayant 6 à 12 atomes de carbone au total,
- chaque X représente indépendamment un atome d'halogène,
- R⁴ représente un groupe alkyle ou alkylène,
- R⁵ représente un groupe alkyle ou alkylène, et
- n est le nombre de motifs répétitifs et est 6 à 60.

2. Procédé selon la revendication 1, dans lequel au moins un substituant R¹ et/ou au moins un substituant R² représente un substituant qui est capable de diriger un électrophile vers une position au niveau du cycle aromatique qui se trouve en position ortho ou para, de préférence en position para, par rapport au substituant R¹ et/ou substituant R², respectivement.

3. Procédé selon l'une des revendications 1 à 2, dans lequel au moins un substituant R¹ et/ou au moins un substituant R² est en position ortho par rapport au groupe carbonate substituant le même cycle aromatique.

4. Procédé selon l'une des revendications 1 à 3, dans lequel chaque substituant R¹ et chaque substituant R² représente indépendamment un groupe alkyle ou un groupe alcoxy, de préférence un groupe alkyle ou alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

5. Procédé selon l'une des revendications 1 à 4, dans lequel R³ représente un groupe alkyle ou alkylène non interrompu et ayant 1 à 8 atomes de carbone.

6. Procédé selon l'une des revendications 1 à 5, **caractérisé en ce que** soit un solvant halogéné et/ou un solvant aromatique, soit aucun solvant, de préférence un solvant halogéné, est utilisé.

7. Procédé selon l'une des revendications 1 à 6, dans lequel le catalyseur de type acide de Lewis, de préférence le catalyseur de type acide de Lewis à base de métal ou de métal de transition comprend un métal ou un métal de transition choisi parmi Al, Zn, Fe, Sc, Ti, Bi, Te, Nb ou In, de préférence Al, Fe ou In.

8. Procédé selon la revendication 7, dans lequel le catalyseur de type acide de Lewis, de préférence le catalyseur de type acide de Lewis à base de métal ou de métal de transition est choisi parmi AlCl₃, ZnBr₂, FeBr₃, FeCl₃, Fe(OAc)₂, Sc(OTf)₃, TiCl₄, BiCl₃, Bi(OTf)₃, TeCl₄, NbCl₅, InCl₃ ou In(OTf)₃, de préférence AlCl₃, FeBr₃, FeCl₃ ou InCl₃.

9. Procédé selon l'une des revendications 1 à 8, dans lequel le catalyseur de type acide de Lewis est ajouté en une quantité de 0,1 à 6,0 équivalents, de préférence de 1,0 à 6,0 équivalents, par rapport au composé de formule (I).

10. Procédé selon l'une des revendications 1 à 9, dans lequel le composé de formule (IIa) ou (IIb) est ajouté en une quantité de 0,5 à 3,0 équivalents par rapport au composé de formule (I).

11. Polycarbonate comprenant un motif répétitif ayant une structure de formule (IIIa) 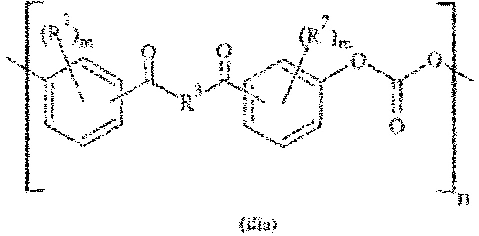
dans laquelle le motif répétitif ayant une structure de formule (III) comprend deux cycles aromatiques, un groupe carbonate -OC(=O)O- et un groupe de liaison - C(=O)R³C(=O)-, un des deux cycles aromatiques étant substitué par le groupe carbonate, les deux cycles aromatiques étant liés via le groupe de liaison et le groupe de liaison dans chaque motif répétitif est indépendamment soit en position ortho, méta ou para par rapport au groupe carbonate,
ou (IIIb) 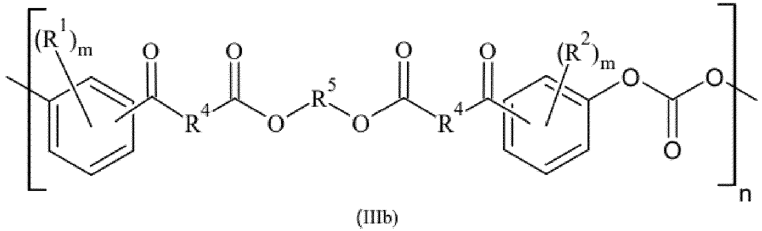
dans laquelle le motif répétitif ayant une structure de formule (IIIb) comprend deux cycles aromatiques, un groupe carbonate -OC(=O)O- et un groupe de liaison - C(=O)R⁴C(=O)OR⁵OC(=O)R⁴C(=O)-, un des deux cycles aromatiques étant substitué par le groupe carbonate, les deux cycles aromatiques étant liés via le groupe de liaison et le groupe de liaison dans chaque motif répétitif est indépendamment soit en position ortho, méta ou para par rapport au groupe carbonate,
et dans laquelle
- chaque m, indépendamment est 1 à 4, de préférence 1 à 3,
- chaque R¹ et R² représente indépendamment respectivement un substituant R¹ et un substituant R², qui est capable d'activer le cycle aromatique qu'il substitue par un effet mésomère et/ou un effet inductif, sous réserve qu'au moins un substituant R¹ et en outre au moins un substituant R² présente un effet +M,
- R³ représente
∘ un groupe alkyle ou alkylène ayant 1 à 20 atomes de carbone, dans lequel ce groupe alkyle ou alkylène est éventuellement interrompu par au moins un hétéroatome, un groupe carbonyle comportant une fonctionnalité ester ou cétone, un groupe thioester ou une combinaison de ceux-ci, un groupe cycloalkyle ou cycloalkylène éventuellement substitué ayant 6 à 12 atomes de carbone au total,
∘ un groupe phényle éventuellement substitué ayant 6 à 12 atomes de carbone au total,
- R⁴ représente un groupe alkyle ou alkylène,
- R⁵ représente un groupe alkyle ou alkylène, et
- n est le nombre de motifs répétitifs et est 6 à 60.

12. Polycarbonate selon la revendication 11, dans lequel au moins un substituant R¹ et/ou au moins un substituant R² est en position ortho par rapport au groupe carbonate substituant le même cycle aromatique.

13. Polycarbonate selon l'une des revendications 11 à 12, dans lequel le groupe de liaison dans chaque motif répétitif indépendamment est en position méta, par rapport au groupe carbonate.

14. Polycarbonate selon l'une des revendications 11 à 13, chaque substituant R¹ et chaque substituant R² représentant indépendamment un groupe alkyle ou un groupe alcoxy, de préférence un groupe alkyle ou alcoxy ayant 1 à 6 atomes de carbone, plus préférablement méthyle, éthyle, n-propyle, isopropyle, n-butyle, sec-butyle, tert-butyle, n-pentyle, 1-méthylbutyle, 2-méthylbutyle, 3-méthylbutyle, néopentyle, 1-éthylpropyle, cyclohexyle, cyclopentyle, n-hexyle, 1,1-diméthylpropyle, 1,2-diméthylpropyle, 1,2-diméthylpropyle, 1-méthylpentyle, 2-méthylpentyle, 3-méthylpentyle, 4-méthylpentyle, 1,1-diméthylbutyle, 1,2-diméthylbutyle, 1,3-diméthylbutyle, 2,2-diméthylbutyle, 2,3-diméthylbutyle, 3,3-diméthylbutyle, 1-éthylbutyle, 2-éthylbutyle, 1,1,2-triméthylpropyle, 1,2,2-triméthylpropyle, 1-éthyl-1-méthylpropyle, 1-éthyl-2-méthylpropyle, 1-éthyl-2-méthylpropyle, méthoxy, éthoxy, n-propoxy, isopropoxy, n-butoxy, sec-butoxy, tert-butoxy, n-pentoxy, 1-méthylbutoxy, 2-méthylbutoxy, 3-méthylbutoxy, néopentoxy, 1-éthylpropoxy, cyclohexoxy, cyclopentoxy, n-hexoxy, 1,1-diméthylpropoxy, 1,2-diméthylpropoxy, 1,2-diméthylpropoxy, 1-méthylpentoxy, 2-méthylpentoxy, 3-méthylpentoxy, 4-méthylpentoxy, 1,1-diméthylbutoxy, 1,2-diméthylbutoxy, 1,3-diméthylbutoxy, 2,2-diméthylbutoxy, 2,3-diméthylbutoxy, 3,3-diméthylbutoxy, 1-éthylbutoxy, 2-éthylbutoxy, 1,1,2-triméthylpropoxy, 1,2,2-triméthylpropoxy, 1-éthyl-1-méthylpropoxy, 1-éthyl-2-méthylpropoxy ou 1-éthyl-2-méthylpropoxy.

15. Polycarbonate selon l'une des revendications 11 à 14, dans lequel R³ représente un groupe alkyle ou alkylène non interrompu et ayant 1 à 8 atomes de carbone.
